(19) Europäisches Patentamt
European Patent Office
Office européen des brevets

(11) **EP 1 890 397 B1**

(12) **EUROPEAN PATENT SPECIFICATION**

(45) Date of publication and mention
of the grant of the patent:
**08.12.2010  Bulletin 2010/49**

(51) Int Cl.:
**H04B 7/06** (2006.01)

(21) Application number: **06017294.7**

(22) Date of filing: **18.08.2006**

(54) **Transmitter/receiver and method for communicating with a remote transmitter/receiver using spatial phase codes**

Sender/Empfänger und Verfahren zur Kommunikation mit einem Fernsender/-Empfänger anhand von räumlichen Phasenkodes

Emetteur/récepteur et procédé pour communiquer avec un émetteur/récepteur distant en utilisant des codes de phases spatiaux

(84) Designated Contracting States:
**DE GB**

(43) Date of publication of application:
**20.02.2008  Bulletin 2008/08**

(60) Divisional application:
**10174537.0 / 2 249 486**

(73) Proprietor: **NTT DoCoMo, Inc.**
**Chiyoda-ku**
**Tokyo 100-6150 (JP)**

(72) Inventor: **Kaiser, Stefan Dr.**
**82205 Gilching (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 681 784      EP-A1- 1 156 596**
**US-A1- 2005 048 933**

EP 1 890 397 B1

**Description**

The present invention is in the field of wireless communication systems and, particularly, relates to spatial signal processing for addressing problems related to multi-path fading.

Multi-path propagation causes that multiple replicas of the transmitted signal superimpose at the receiver antenna. The constructive and destructive superposition of replicas of the transmitted signal causes frequency selective fading at the receiver antenna. If there are moving objects in the propagation channel, the fading is also time selective. In deep fades, the signal strength at the receiver antenna gets close to zero and with additive noise at the receiver, the transmitted signal can no longer be detected without error.

Today's wireless communication systems use methods like combinations of interleaving and channel coding, spectrum spreading, diversity transmission and reception, ARQ (Automatic Repeat Request) etc. in order to counteract the negative effects of channel fading.

EP 1 681 784 A2 discloses a mobile station apparatus and control method for the mobile station apparatus. A wireless base station apparatus transmits two signals from different antennas, and each antenna has its own pilot symbol information. Furthermore, the antenna signals are weighted by different antenna weights. The complex antenna weights are determined by feedback information from a mobile station. The mobile station apparatus determines a feedback information bit based on the phase comparing unit, which compares the phase from the first antenna signal to the phase of the second antenna signal. Depending on an SIR for each separate transmission antenna signal, an antenna verification result is used in a demodulation and decoding operation, or not. Depending on the feedback information, the base station introduces a phase difference between the first antenna and the second antenna of +/- $\pi$/4 or +/- 3$\pi$/4.

EP 1 156 596 A1 discloses a communication terminal and a wireless communication method in a closed-loop transmission diversity. Particularly, a communication terminal apparatus calculates a phase correcting value for compensating for the effect of phase rotation due to the transmission diversity, using known feedback information, and corrects a received signal on a communication channel based on the phase correcting value, or corrects a channel estimation value based on the phase correcting value. Each antenna signal is generated using a specific code for the specific antenna.

US 2005/0048933 A1 discloses an adaptive transmit diversity scheme with quadrant phase constraining feedback. Each data stream is adaptively linear space encoded to produce an encoded signal for each transmit antenna of each group according to feedback information for the group. The feedback information is determined independently of each group of transmit antennas from the channel impulse responses. In a system for two transmit antennas, a single binary feedback bit is used, which is either 0 or 1 and which is used within the space-encoding vector.

It is the object of the present invention to provide an improved concept for operating a transmitter/receiver device in an environment, in which deep fades occur.

This object is achieved by a transmitter/receiver in accordance with claim 1 or 18, a method of transmitting/receiving in accordance with claim 37 or 38, or a computer program in accordance with claim 39.

The present invention is based on the finding that, in contrast to prior art approaches, which do a lot for preparing for a situation of a deep fade, the present invention addresses the problem at the root. In accordance with the present invention, the occurrence of a deep fade itself is avoided or at least mitigated. Therefore, deep fade-related errors do not occur any more in transmitters/receivers, which operate in accordance with the present invention. A transmitter/receiver device receiving an information signal from a remote transmitter/receiver device includes a receiving quality evaluator for evaluating a receiving quality of the signal, and further includes a feedback generator for generating a feedback for the remote transmitter/receiver, when the receiving quality is below a threshold.

When the receiving quality is below the threshold, this means that a fade occurs, i.e., a destructive superposition of a transmission signal from a first transmit antenna and a transmission signal from a second transmit antenna, wherein the first transmit antenna and the second transmit antenna are located at different spatial positions.

The feedback signal instructs the remote transmitter/receiver to change a phase relationship between the two transmit signals. Particularly, the remote transmitter/receiver includes a transmitter module for generating the two transmit signals transmitted by the different antennas. Furthermore, the remote transmitter/receiver includes a phase encoder for changing a phase relationship between the first transmit signal and the second transmit signal in response to a phase change control signal, which phase change control signal is generated from the received feedback signal indicating a partial or even complete deep fade at the receiver of the information signal.

Although the inventive transmitter/receiver can be a single carrier device, it is preferred to use the present invention in connection with a multi-carrier device such as a device operating in accordance with the OFDM (OFDM = Orthogonal Frequency Division Multiplex) technique. Although one might perform the quality evaluation for each sub-carrier individually, and although one might transmit a separate feedback information for each sub-carrier individually, it is preferred to perform a chunk-based procedure, in which a plurality of sub-carrier values covering a certain bandwidth and also covering a certain time duration are treated as an entity so that, for the sub-carriers in the chunk, the same phase processing is applied. Therefore, only a limited amount of overhead due to the feedback signal falls due. In an exemplary embodiment, only a single bit is required for changing the phase relationship for all sub-carriers within the chunk.

In preferred embodiments, the receiving quality evaluator only requires a rough channel estimate for the transmission channel from the remote transmitter/receiver to the transmitter/receiver. This channel estimate can even be just a magnitude of a complex channel coefficient. This channel estimate together with a known transmission power and, together with an actually measured receiving power safely allows determining at the transmitter/receiver, whether the quality is below the quality threshold.

Alternatively, any other quality indicator can be used such as a bit error threshold, a signal-to-noise ratio threshold, or any other quality indicator depending on the received signal power, the channel coefficient, or a ratio of such transmission quality related values.

Since the difference between a constructive superposition, a neutral superposition, and a destructive superposition is remarkable, it is, in accordance with the present invention, possible to do a straightforward and therefore, robust threshold determination to detect a deep fade situation.

As soon as a deep fade situation has been detected, the feedback signal is transmitted to the remote transmitter/receiver so that the transmitter/receiver changes the phase relationship between the two transmission signals. A preferred way of changing the phase relationship is that the phase of one transmission signal is flipped by 180 degrees.

When such a phase-flipped signal is transmitted from the transmitter to the receiver, this looks, in the eyes of the transmitter/receiver as a different transmission channel, which incurs, for one transmission signal, a 180 degrees phase shift. Since this information is available at the transmitter/receiver receiving the information signal, the transmitter/receiver can advantageously use this already available information in the form of the feedback signal, which is, of course, generated by the transmitter/receiver receiving the information signal so that the phase change can be accounted for when decoding the received signal.

In other embodiments, a channel estimation is performed based on blind channel estimation techniques, or pilot information based techniques. Thus, the decoder-side channel estimator will automatically detect the changing transmission channel induced by the feedback signal. Thus, the only thing what has to be done is that the channel estimator is controlled by the feedback signal generator so that the channel estimator accounts for the abruptly changing transmission channel introduced by the artificially created phase flip of one or both transmission signals.

While preferred embodiments rely on a phase flip of 180 degrees, which not only addresses a negative effect of a destructive superposition, but which changes this destructive superposition into a constructive superposition (both states are only 180 degrees different from each other), other phase values are also useful, since they, in any case, relieve the situation of a deep fade. Preferably, phase flips of at least 90 degrees are initiated by the feedback signal.

When a pilot information based channel estimator is used, the phase flips can vary over time or frequency even in a random manner, since any pilot tones used for channel estimation are also occurring using any phase-changed symbols so that a channel estimator will automatically correct for the artificially introduced phase change. Therefore, the channel estimator does not have to know the exact phase change value introduced by phase flipping. This feature increases robustness of this technique, since a precise phase control at the sender is not necessary.

Preferably, a channel estimation scheme is used, which is based on a pilot grid. In the context of a multi-carrier system, a pilot grid will have certain pilot tone positions at sub-carriers spaced apart in frequency and, also, spaced apart in time. In such a situation, a channel estimator will interpolate between channel values determined based on pilot tones for generating channel estimates for sub-carriers, which do not transmit pilot tones but which transmit information to be decoded at the receiver. Preferably, the channel estimator is controlled by the feedback signal generator to account for any phase flips introduced by a feedback signal. This will avoid any channel interpolation problems, which might be incurred when a channel interpolator tries to interpolate a channel estimate for a sub-carrier having a flipped phase value, while the starting value for the interpolation is from a sub-carrier having a non-flipped phase value.

While the known solutions provide methods to best cope with channel fading, this invention provides a method to prevent fading at the receiver antenna. The invention modifies the transmitted signal in such a manner that a destructive superposition of the signals at the receiver antenna is avoided to a high extent. Especially the deep fades can efficiently be prevented. The invention preferably transforms the destructive signal superposition in a constructive superposition, enhancing the received signal power.

Preferred embodiments of the present invention are subsequently described with respect to the accompanying drawings, in which: .

Fig. 1       is an overview over a transmitter/receiver and a remote transmitter/receiver communicating in accordance with the present invention;

Fig. 2a     is a block diagram of a preferred embodiment of an inventive transmitter/receiver with generalized phase coding;

Fig. 2b    is a more detailed diagram of the transmitter/receiver of Fig. 2a in the context of an OFDM multi-carrier system;

Fig. 2c    is an illustration for showing a preferred way of phase coding in the context of two antennas;

Fig. 3a    illustrates a comparison between a constructive superposition, a destructive superposition, and a power neutral superposition;

Fig. 3b    illustrates a channel-impulse response of a frequency-selective channel;

Fig. 3c    illustrates a channel transfer function of a frequency-selective channel;

Fig. 4    illustrates the principle of phase coding underlying a preferred embodiment of the present invention;

Fig. 5    illustrates a simulation result for an OFDM multi-carrier system illustrating the invention's potential for avoiding deep fades;

Fig. 6    illustrates a detailed embodiment of an inventive transmitter/receiver for receiving an information signal and for transmitting the feedback signal;

Fig. 7    illustrates a simulation result for a typical urban channel model;

Fig. 8    illustrates a simulation result for a typical indoor channel model;

Fig. 9    illustrates a chunk-based embodiment of the present invention for reducing signalling overhead.

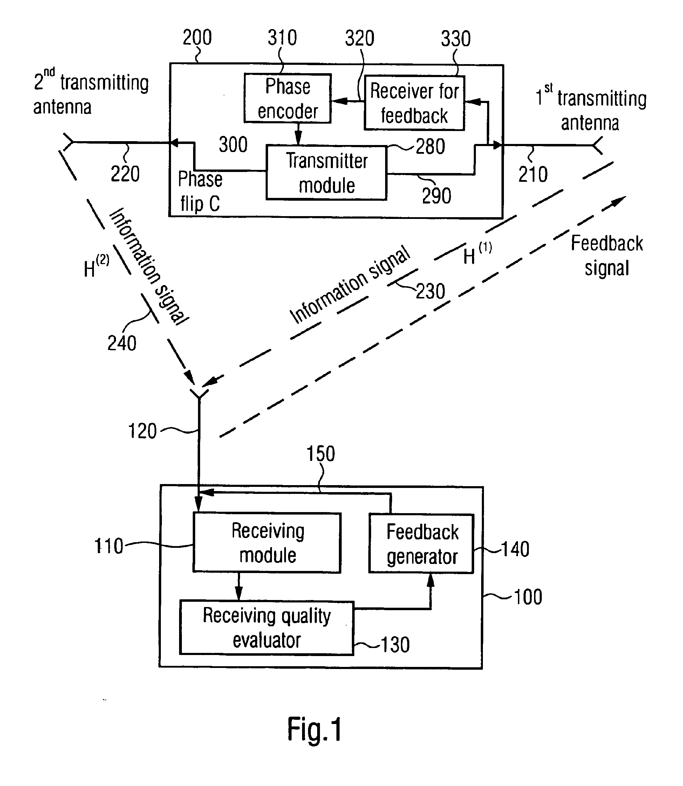

Fig. 1 illustrates a transmitter/receiver 100 for communicating with the remote transmitter/receiver 200. The remote transmitter/receiver 200 has two transmitting antennas 210, 220, which simultaneously transmit the same information signal via a first channel $H^{(1)}$ 230 and via a second channel $H^{(2)}$ 240. The transmitter/receiver 100 includes a receiver module 110 for receiving a signal via a receiving antenna 120. This signal received via the receiving antenna 120 is a superposition of two or more transmit signals generated by the two or more transmit antennas 210, 220 positioned at different spatial positions at the remote transmitter/receiver 200. Although one can say that the two channels 230, 240 are different from each other, the receiver antenna 120 will not be able to distinguish between those channels except certain specific measures are taken. When no such measures are taken, the receiving signal will be a superposition of a signal transmitted via channels 230, 240, and the transmitter/receiver 100 will only "see" a certain channel between the transmitter/receiver 100 and the remote transmitter/receiver 200.

Certain measures for distinguishing between the channels 230 and 240 might be the transmission of different pilot information via the first transmit antenna 210 and the second transmit antenna 220, which would enable a channel estimator residing in the transmitter/receiver 100 to determine separate channel coefficients for both channels. When, however, such measures are not taken, the transmitter/receiver 100 will not distinguish between both channels and will only see a single channel.

The transmitter/receiver 100 furthermore includes a receiving quality evaluator 130 for evaluating a receiving quality of the signal. Furthermore, a feedback generator 140 is provided, which is operative to generate a feedback signal on line 150 for the remote transmitter/receiver, when the receiving quality is below a threshold. The feedback signal 150 is suitable for instructing the remote transmitter/receiver 200 to change the phase relationship between the transmit signals transmitted via antennas 210, 220. This will result in an immediate end of a destructive superposition and will result in an immediate turn of the destructive superposition to a constructive superposition, which results in a substantially increased power at the receiving antenna 120 of the transmitter/receiver 100.

The feedback generator 140 preferably includes a transmitter module for transmitting the feedback signal 150 to the remote transmitter/receiver. Although it is illustrated in Fig. 1 that the feedback signal is back transmitted via channel 230, this may also be different. Normally, the feedback signal will receive both antennas 210, 220 at the transmitter/receiver 200. However, the transmitter/receiver 200 may be designed so that it receives the feedback signal on a certain channel, which is, for example, only detected at a first transmit antenna output signal so that any reception power of the feedback signal arriving at the second transmit antenna will be neglected.

Naturally, one could, of course, also utilize the diversity effect incurred by the two antennas also for the reception of the feedback signal at the transmitter/receiver 200. This is, however, not so critical, since the information content in the feedback signal is not so dense compared to the information content in the regular information signal.

Particularly, the remote transmitter/receiver 200 includes a transmitter module 280 for generating a first transmit signal 290 to be used for being transmitted via the first transmit antenna 210. Furthermore, the transmitter module 210 is operative for generating a second transmit signal 300 to be used for being transmitted via a second transmit antenna. The transmitter/receiver 200 furthermore includes a phase encoder 310, which is coupled to the transmitter module 280 such that a phase relationship between the first transmit signal 210 and the second transmit signal 220 in response to the phase change control signal 320 is obtained. The phase change control signal is provided by a receiver 330 for receiving the feedback signal from the transmitter/receiver 100, wherein the receiver may have a controller for generating the phase change control signal in response to the feedback signal.

Generally, the phase encoder 310 is operative to change a phase relationship between the first transmit signal and the second transmit signal preferably by more than 90 degrees and even more preferably by a phase value between 160 and 200 degrees, and even more preferably by 180 degrees. This value comes closest to the effect that a normally negative destructive superposition is changed into a preferred constructive superposition at the receiving antenna 120 of transmitter/receiver 100.

While the change of the phase relationship between the two transmit signals can be obtained by not touching the first transmit signal and by changing the phase of the second transmit signal by the full phase change value such as 180 degrees, the phase encoder 310 may also be operative to touch both signals and to change both signals by a certain phase change value so that a resulting phase change value is equal to the target value of for example 180 degrees. In that case, the first transmit signal could be changed by +90 degrees, while the second transmit signal might be changed by -90 degrees

Furthermore, particularly in the context of multi-carrier transmission, the change of the phase relationship can preferably be performed carrier-selectively. The phase could be changed in the RF signal after up converting, i.e., at the signal, which is amplified and forwarded to the antenna. Due to easier processing capabilities, it is preferred to change the phase relationship at any place in the signal processing chain before up-conversion.

It is preferred to change the phase relationship in the base band, i.e., before an information signal is mapped onto a carrier or after an information value is mapped onto a carrier, but before performing a multi-carrier modulation. This embodiment is useful in connection with an OFDM multi-carrier scheme, since manipulating the complex subcarrier values carrying the useful information can easily be implemented by a phase pre-coding operation controlled by feedback signals carried out upon one or both transmission signals.

Thus, a complex amplitude of a sub-carrier determined by information bits to be transmitted will be changed into a different complex amplitude, which might even be identical to a different information symbol. This, however, does not result in a decoding error, since, in the context of a channel estimator, the pilot symbol for this transmit signal will also occur as a phase-flipped value.

From this perspective, the transmitter/receiver 100 in Fig. 1 will not notice a phase change provided by the remote transmitter/receiver, but will notice this phase change as a different transmission channel, and this different transmission channel will be estimated by a straight-forward channel estimator included in the receiving quality evaluator at 130 in Fig. 1.

Thus, the present invention has the following advantages:

- Deep fades due to multi-path propagation can be prevented.

- The destructive superposition of signals is transformed into a constructive superposition, enhancing the overall signal-to-noise ratio at the receiver antenna.

- It can be applied to counteract frequency and time selective fading.

- It is well suited for multi-carrier systems exploiting e.g. OFDM but also applicable to single carrier schemes.

- It can easily be combined with transmit diversity schemes like phase diversity or CDD (cyclic delay diversity) [1] [2] .

- It can be applied to systems with multiple transmit and receive antennas.

- It is well suited for a block-based transmission (resource blocks, chunks).

- It is applicable to multiple access schemes like OFDMA, OFDM-TDMA, MC-CDMA in the up and the downlink.

- Current system concepts of 3GPP LTE and WINNER provide the essential means to implement the new solution.

Basic Principle

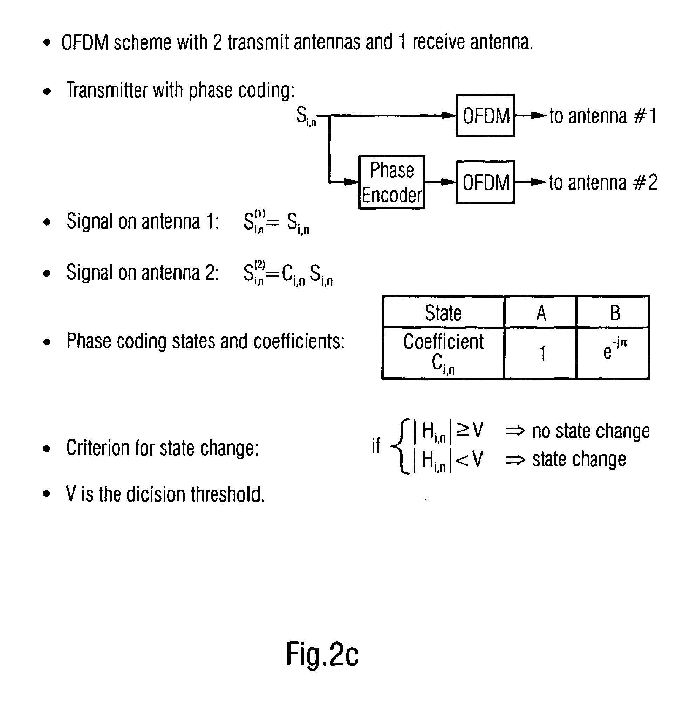

The basic idea behind the invention is exemplarily described for a scenario where an OFDM transmission with 2 Tx and 1 Rx antenna is considered. The transmitter/receiver with phase coding is shown in Figure 2c.

An OFDM symbol $S_i = (S_{i,0}, S_{i,1}, ..., S_{i,N_c}-1)$ is simultaneously transmitted over 2 Tx antennas, where $i$ is the discrete time index. The element $S_{i,n}$ indicates the data symbol on the n-th subcarrier in the i-th OFDM symbol. $N_c$ is the total number of sub-carriers per OFDM symbol. The signal transmitted on the first antenna is

$$S_{i,n}^{(1)} = S_{i,n}$$

The signal transmitted on the 2nd antenna is phase encoded according to

$$S_{i,n}^{(2)} = C_{i,n} S_{i,n}$$

The phase coding coefficient $C_{i,n}$ depends on the state of the phase encoder and is illustrated in the following table.

| State | A | B |
|---|---|---|
| Coefficient $C_{i,n}$ | 1 | $e^{-j\pi}$ |

The phase encoder can be in any of the two states initially. The total transmit power is P. The power is normalized such that the average power $P^{(1)}$ at the first antenna and the average power $P^{(2)}$ at the second antenna are P/2 each.

The channels between Tx antenna 1 and the Rx antenna (channel (1)) as well as between Tx antenna 2 and the Rx antenna (channel (2)) are normalized such that the average transmit power corresponds to the average received power. In this example, a simplified channel model is applied where the channel from each Tx antenna has one line-of-sight path. The signals of both channels superimpose with a random angle $\alpha$, which is equally distributed between 0 and $2\pi$.

The received signal can be written as

$$R_{i,n} = R_{i,n}^{(1)} + R_{i,n}^{(2)}$$

where

$$R_{i,n}^{(1)} = \frac{1}{\sqrt{2}} S_{i,n}^{(1)} H_{i,n}^{(1)} = \frac{1}{\sqrt{2}} S_{i,n} H_{i,n}^{(1)}$$

$$R_{i,n}^{(2)} = \frac{1}{\sqrt{2}} S_{i,n}^{(2)} H_{i,n}^{(2)} = \frac{1}{\sqrt{2}} C_{i,n} S_{i,n} H_{i,n}^{(2)}$$

$R_{i,n}^{(m)}$ is the contribution to the received signal coming from the m-th transmitting antenna and $H_{i,n}^{(m)}$ the channel coefficient of the channel between the m-th antenna at the transmitter and the receiver antenna. The factor $1/\sqrt{2}$ represents the power normalization per transmit antenna. It follows that

$$R_{i,n} = \frac{1}{\sqrt{2}} S_{i,n} \left( H_{i,n}^{(1)} + C_{i,n} H_{i,n}^{(2)} \right) = \frac{1}{\sqrt{2}} S_{i,n} H_{i,n}$$

$H_{i,n}$ is the channel coefficient at the receiver antenna resulting from the superposition of both channels and taking into account the phase coding, i.e.,

$$H_{i,n} = \left( H_{i,n}^{(1)} + C_{i,n} H_{i,n}^{(2)} \right)$$

In order to simplify the explanation of the basic idea, additive white Gaussian noise (AWGN) is not taken into account at this stage.

At the receiver, the absolute value $|H_{i,n}|$ is compared with a predefined threshold V. For the channel used in this example we have $|H_{i,n}^{(1)}| = |H_{i,n}^{(2)}| = 1$. The threshold with respect to amplitude results in $V = \sqrt{2}$ (approx. 1,41). The power threshold corresponds to the amplitude threshold when a corresponding squaring operation is performed.

If the total received power is above or equal to the threshold V, the signals of two channels superimpose constructively. If the total received power is below V, the signals of the two channels superimpose destructively and the receiver forces the transmitter/receiver to change the state in the phase encoder, i.e.,

$$\begin{cases} \left| H_{i,n} \right| \geq V & \Rightarrow \text{no state change} \\ \left| H_{i,n} \right| < V & \Rightarrow \text{state change} \end{cases}$$

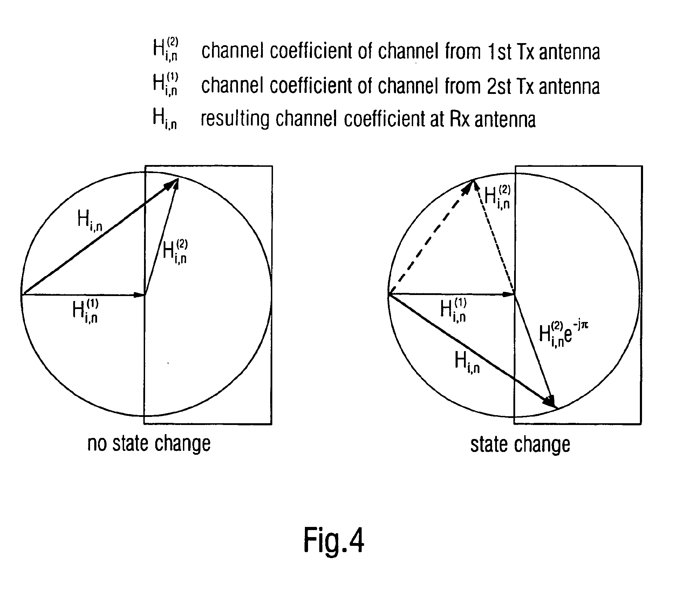

The shift of the phase on the respective sub-carrier n by $\pi$ due to a state change will cause that the signals will superimpose constructively in the following transmission, assuming the channel can be considered as quasi constant over two subsequent symbols. The principle of the new phase coding scheme is illustrated in Fig. 4. The amplitude and phase of the channel fading coefficient on sub-carrier n of channel (1) and (2) are indicated by the vectors $H_{i,n}^{(1)}$ and $H_{i,n}^{(2)}$ respectively.

The signalling to the transmitter/receiver that a state change in the phase encoder is necessary can be realized in different ways. It can e.g. be signalled for each subcarrier individually if a state change is necessary or, assuming state changes occur quite rarely if the system is once in a steady state, only the sub-carriers which change are indicated via a signalling channel. Typically, one bit is sufficient to signal if a state change is necessary or not.

This example can be extended to an arbitrary number of Tx and Rx antennas where the phase code per Tx antenna is chosen such that the overall reception condition is improved.

It should be noted that the proposed phase coding scheme can also be applied to single carrier systems. The example above applies multi-carrier modulation with $N_c$ sub-carriers. By setting $N_c=1$, the system reduced to a. single carrier system.

Generalized Phase Coding Algorithm

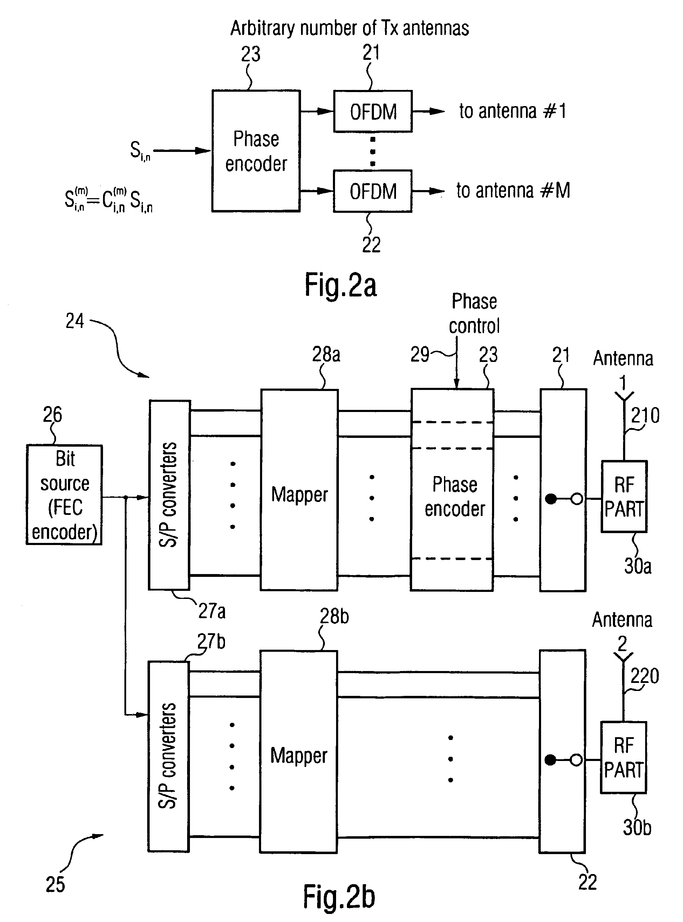

The block diagram of an OFDM scheme with generalized phase coding is shown in Fig. 2a.

The signal transmitted on antenna m, m=1,...,M, is equal to

$$S_{i,n}^{(m)} = C_{i,n}^{(m)} S_{i,n}$$

*M* is the total number of transmit antennas. The selection of the phase coding coefficients $C_{i,n}^{(m)}$ depends on the CSI (channel state information) available at the Tx about the M transmission channels. The following cases can be distinguished:

1. Only the absolute value of the channel coefficient $H_{i,n}$ is available at the transmitter. $H_{i,n}$ is the resulting channel seen after the superposition of the M channels. This was the assumption made in the in the above subsection "Basic Principle". The threshold V for determining the decision for a state change depends in general on the channel and the SNR. V can be adapted to the actual SNR during operation.

2. The transmitter knows the CSI (amplitude and phase) of each of the M channels to the receiver antenna. In this case, the phase of the signal at each transmit antenna can be coded (shifted) such that the signals from the individual antennas superimpose constructively. Moreover, if the amplitude is known per channel, the available transmit power can be distributed between Tx antennas in order to improve the system performance. E.g., more Tx power is given to channels with stronger absolute value of the magnitude (water filling, maximum ratio transmission etc.).

3. Combinations where only partial knowledge about the CSI is available (subset from Case 1 and 2) are possible with the invention.

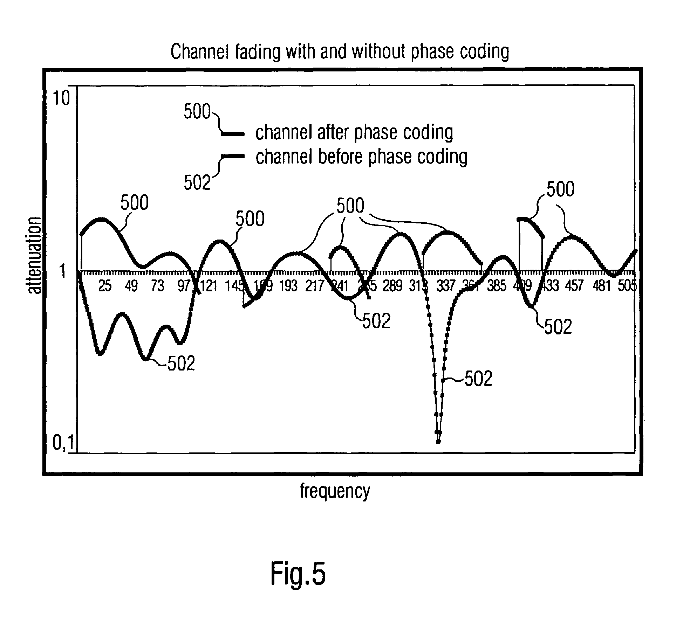

Fig. 5 shows the frequency selective fading with phase coding according to Case 1 (500) and the original fading (502) which are prevented with phase coding. The horizontal axis is the frequency with 512 sub-carriers. The vertical axis represents the attenuation of the channel. In order to better illustrate the effect of phase coding, the noise has been switched off in this graph.

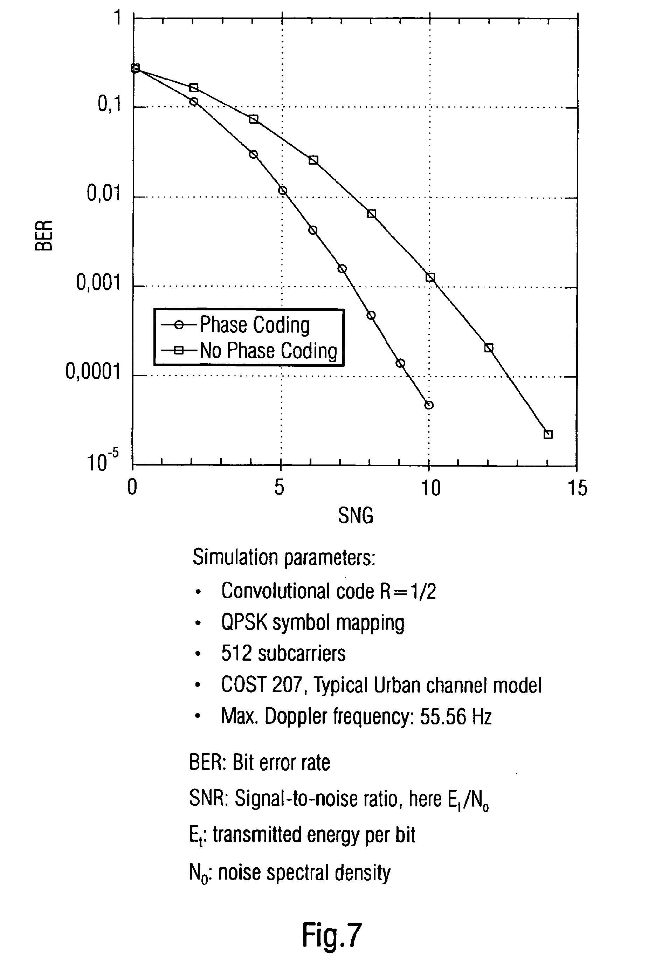

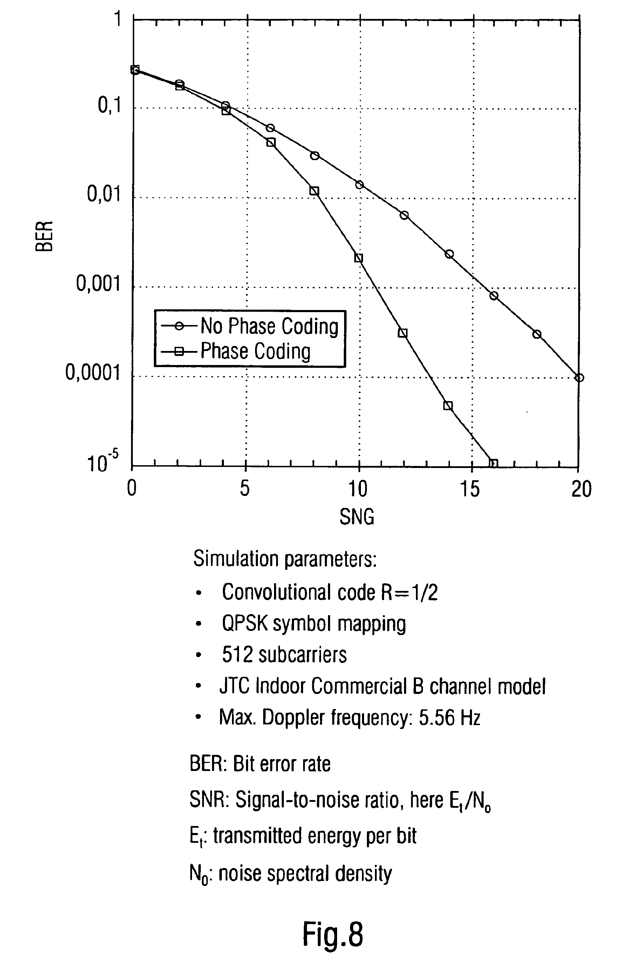

The performance improvements with phase coding compared to schemes without phase coding are presented in Fig. 7 or 8 for an exemplary OFDM system. The system applies as channel code convolutional codes with rate ½ and QPSK symbol mapping. The total number of sub-carriers is 512. In Fig. 7 or 8 the bit error rate (BER) versus $E_t/N_0$ is given. $E_t$ is the transmitted energy per bit and No is the noise power spectral density. The channel model is the COST 207 Typical Urban (TU) channel [3] with a maximum Doppler frequency of 55.56 Hz.

While Fig. 7 illustrates a typical urban channel model, Fig. 8 illustrates simulation parameters of an indoor, channel model.

From both simulations, it becomes clear that phase coding in accordance with the present invention results in a substantially reduced bit error rate, since the curve associated with "phase coding" is always below the curve for "no-phase coding". It is to be particularly noticeable that the present invention provides a substantial increase in bit error rates even at low signal-to-noise ratios, which increase to almost two orders of magnitude, when the Fig. 8 simulation result for a high signal-to-noise ratio of 16 dB is considered.

Resource Block-/Chunk-based Phase Coding

In order to reduce the amount of feedback information and to ease channel estimation at the receiver, a resource block based phase coding scheme is proposed where correlations of the channel in frequency and time are exploited.

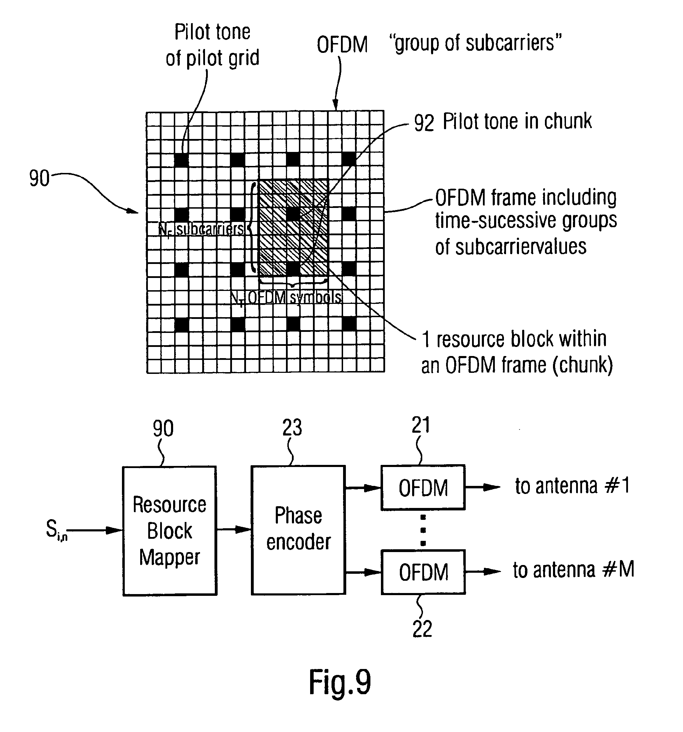

In this system several sub-carriers and OFDM symbols are grouped to a so-called resource block, which is jointly phase coded. A resource block is exemplarily illustrated in Fig. 9.

A resource block is designed such that the channel can be considered as quasi constant over frequency and time within this resource block, i.e., the coherence bandwidth should be larger than the resource block bandwidth and the coherence time should be larger than the resource block duration. Thus, the channel coefficients $H_{i,n}$ can be considered as quasi constant within a resource block, i.e.,

$$H_{j,k} \approx H_{i,n}, \ \forall i, n \in \text{ResourceBlock}_{j,k}$$

*j* is the time index and k the frequency index of a resource block.

Phase coding based on resource blocks is performed as

$$S_{i,n}^{(m)} = C_{j,k}^{(m)} S_{i,n}, \ \forall i, n \in \text{ResourceBlock}_{j,k}$$

where $C_{j,k}^{(m)}$ is the phase coding coefficient of resource block k in the j-th time slot and assigned to the m-th transmit antenna. All symbols $S_{i,n}^{(m)}$ to be transmitted in this resource block are multiplied with the same phase coding coefficient $C_{j,k}^{(m)}$.

If the criterion for a state change in the phase encoder is fulfilled, this is indicated to the transmitter and the state of the phase encoder is changed for the complete resource block. Any of the before mentioned cases for phase coding can be applied. For Case 1 the absolute value of the amplitude of the channel coefficient $H_{j,k}$ can be determined at the receiver by e.g. averaging over several $H_{i,n}$ belonging to the resource block or by taking one $H_{i,n}$ as representative for the resource block.

The application of phase codes to resource blocks has two significant advantages:

1. The application of phase coding causes a discontinuous channel transfer function in frequency and time at positions where a state change is performed in the phase encoder (see Fig. 5). At positions with state changes, channel estimation with filtering in time and/or frequency might fail to estimate the channel with enough accuracy. When applying phase coding in combination with resource block based transmission, this problem can be solved and the overhead for channel estimation can significantly be reduced since filtering in two dimensions within one resource block can be applied. Resource block based phase coding does avoid a discontinuous channel in frequency and time within one resource block.

2. The amount of information to signal the information about a state change back to the transmitter can significantly be reduced since only one message (typically 1 bit) per resource block has to be fed back to the transmitter to indicate a state change.

Phase Coding Combined with Tx Diversity

With this invention it is possible to implement jointly phase coding and various Tx diversity schemes (e.g..[1] [2]) like phase diversity, cyclic delay diversity (CDD), time-variant phase diversity and Doppler delay diversity (DDD), since the phase encoder can inherently perform the phase shift required for any of these diversity schemes. The coefficient of the phase encoder could be chosen as

| State | A | B |
|---|---|---|
| Coefficient $C_{i,n}$ | $e^{-j\Theta_{i,n}^{(m)}}$ | $e^{-j\left(\Theta_{i,n}^{(m)}+\pi\right)}$ |

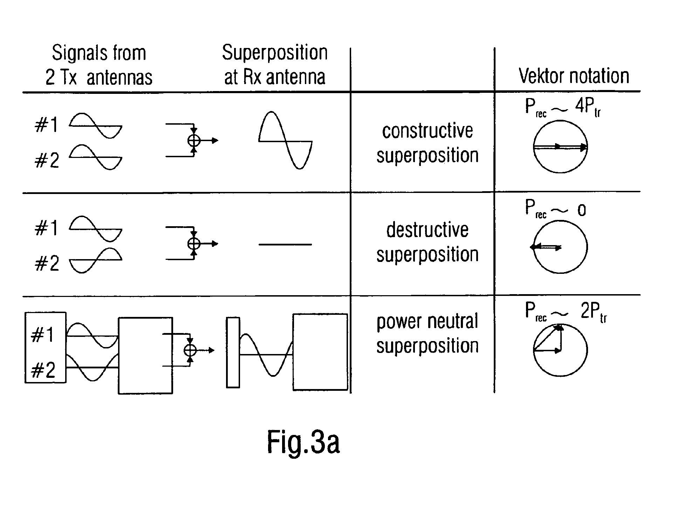

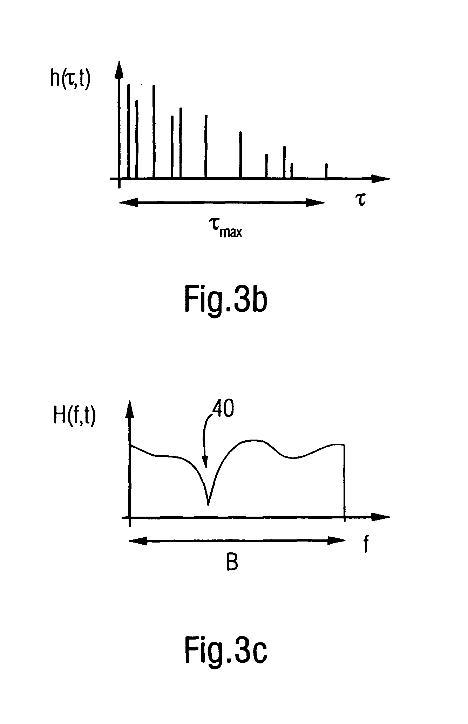

for a scheme with *M Tx antennas* (see Fig. 3). $\Theta_{i,n}^{(m)}$ represents the phase offset for phase diversity on sub-carrier n associated to the m-th transmit antenna where m = 1,...,M. The phase offset $\Theta_{n}^{(m)}$ can be time variant as shown in [1].

Subsequently, Fig. 2a and Fig. 2b are discussed in more detail. Fig. 2a illustrates two separate OFDM modulators 21, 22, wherein a separate OFDM modulator can be applied to each individual antenna when there are more than two antennas.

Both OFDM modulators 21, 22 are fed by a phase encoder 23, which is, in the Fig. 2a embodiment, a base band phase encoder. A more detailed representation of Fig. 2a is illustrated in Fig. 2b. Again, two transmission branches 24 and 25 are illustrated. Both branches are fed by a bit source 26, which may, for example, be a forward error correction encoder. The FEC-encoder 26 outputs a serial stream of bits, which is inserted into a serial/parallel converter, which may be provided in each branch 24, 25. Then there exist two separate serial/parallel converters 27a, 27b. Alternatively, both transmission branches 24, 25 could use the same serial/parallel converter.

The serial/parallel converter forms groups of bits. In the example of the QPSK mapping, two bits are mapped into a complex amplitude of a sub-carrier. For other constellation schemes, more than two bits can be mapped onto a single sub-carrier. In the case of 16 QAM, 4 bits are mapped onto a single sub-carrier.

Thus, the serial/parallel converter will group a number of bits for each sub-carrier and will forward this group of bits for each sub-carrier via an output line to a mapper 28a for the upper branch 24 and a mapper 28b for a lower branch 25. Again, one could also use a single mapper and one could use the mapped symbols for the upper branch as well as for the lower branch. In this case, a branching would have to be present at the output of the single mapper.

Then, the output of upper mapper 28a is input into the phase encoder 23, which receives a phase control signal at input 29. This phase control signal can selectively control each sub-carrier or could also control a group of sub-carriers in the case of the chunk embodiment as discussed in connection with Fig. 9. In the lower branch 25, however, no phase encoder 23 is present so that the output of the mapper 28b receives the modulator 22 without any phase change. However, the output of the phase encoder receives the modulator 21 after having been subjected to a phase change controlled by the phase control signal 29. As it is known in the art, an OFDM modulator is a frequency/time converter as indicated by the corresponding symbol in Fig. 2b. Preferably, an IFFT algorithm is used for the OFDM modulator 21, 22. The output of the modulator 21 is input into an RF part 30a of the upper branch, while an output of modulator 22 is input into an RF part 30b of the lower branch. The RF part 30a for the upper branch is connected to antenna 1, 210, while the RF part 30b is connected to antenna 2, 220, of the lower branch. Thus, when one compares Fig. 2b to Fig. 1, it becomes clear that, in contrast to Fig. 1, the phase shift has been applied to the first transmit signal while, in Fig. 1, the situation was shown, in which the phase shift (symbol C) was introduced into the second transmit signal.

Naturally, as outlined before, one could also introduce a separate phase encoder in the lower branch 25 after the mapper 28b. Then, in order to change the phase relationship between the upper and the lower branch for at least one sub-carrier, the phase encoders would have to apply a different phase shift for the same sub-carrier in the upper branch and the lower branch to avoid an upcoming destructive superposition.

Subsequently, Fig. 3a will be discussed in more detail in order to discuss the selection of a preferred receiving quality threshold.

The upper part of Fig. 3a illustrates the situation of a constructive superposition. The channel vectors are in phase to each other. Then, when it is assumed that both transmit signals are also in phase to each other, the receiving power will be proportional to the double transmission power $P_{tr}$, when $P_{tr}$ is the transmission power of a single transmit signal, and when both transmission powers are equal to each other.

When the transmission powers of both transmission signals are different from each other, then the receiving power in the context of a constructive superposition will be higher than the sum of the transmission powers due to coherent superposition. Naturally, since the receiver is remote from the transmitter, the receiving power will be substantially smaller, which is indicated by the magnitude of the channel vector. In case of a destructive superposition as indicated in the second part of Fig. 3a, the transmit signals are, when viewed at the receiving antenna, 180 degrees out of phase. Therefore, when both signals have the same power at the reception antenna, a complete fade will occur, which is also indicated by the vector notation resulting in a zero-vector.

In a power-neutral superposition as indicated in the third part of Fig. 3a, it is assumed that both transmission signals are orthogonal to each other. From the vector notation, it becomes clear that the resulting power is equal to two times the transmission power $P_{tr}$ of a single antenna.

In view of that, when no additional disturbances or distortions occur, one can say that a deep fade starts to occur, when the receiving power drops below a square root of 2, assuming that the damping coefficient multiplied by the transmission power is normalized to one.

Thus, one could generate and transmit a feedback signal as soon as the reception power $P_{rec}$ drops below square root of 2 in the above discussed normalized situation.

However, it has been turned out that thresholds below square root of 2 result in even better performances. Preferably, the threshold is selected to be greater than zero and smaller than 2. A preferred range is between 0.05 and 1.41. The smaller the threshold is selected the smaller is the number of phase flips in a certain time period. Thus, a very small threshold only causes a phase flips when the fading situation is significant but does not cause a phase flip for light fadings. This is useful when the amount of noise in the system is low. For increasing noise powers one would prefer to increase the threshold. When a threshold would be selected around 2 this would result in a high number of phase flips, which decreases with a decreasing threshold. High thresholds are useful in situations, in which the high number of phase flips is not so disturbing.

Such thresholds result in better reception characteristics in realistic channel scenarios, since, as one can see in Fig. 4, a longer resulting channel coefficient can also be obtained by having shorter channel coefficients of the separate channels, which are not in a 90 degrees situation, but which have an angle different from 90 degrees.

In a preferred embodiment, the receiver will know the transmission power and will also know the channel characteristics due to a channel estimator performing a pilot tone based channel estimation. Then, by measuring the reception power, a threshold as discussed in connection with the lower portion of Fig. 3a of between 0.1 and 1.41 in the normalized case can be applied.

Alternatively, other channel quality thresholds can be used such as a decreasing bit error rate, which is below a threshold value, or a bit error rate, or reception power related to a certain carrier in a multi-carrier scenario compared to an average bit error rate, or reception power over several carriers. When Fig. 5 is considered, one would measure a significant deviation between the reception power of carrier 337 compared to an average reception power measured over all carriers. Thus, one could use a threshold deviation between a single carrier characteristic from an average characteristic as an indication that a deep fade occurs at a certain frequency.

Alternatively, one could also measure an individual signal-to-noise ratio for a certain carrier and one could compare this individual signal-to-noise ratio to an average signal-to-noise ratio of all carriers of a group of carriers constituting an OFDM symbol.

Figs. 3b and 3c illustrate a channel impulse response (Fig. 3b) and a channel transfer function (Fig. 3c) of a transmission channel having a frequency-selective deep fade at 40. A receiving quality characteristic for a carrier having a frequency in the deep fade region 40 will significantly deviate from an average characteristic over all carriers so that one can even detect a deep fade for a certain frequency region without having information on the transmission power or without having a well-equipped channel estimator.

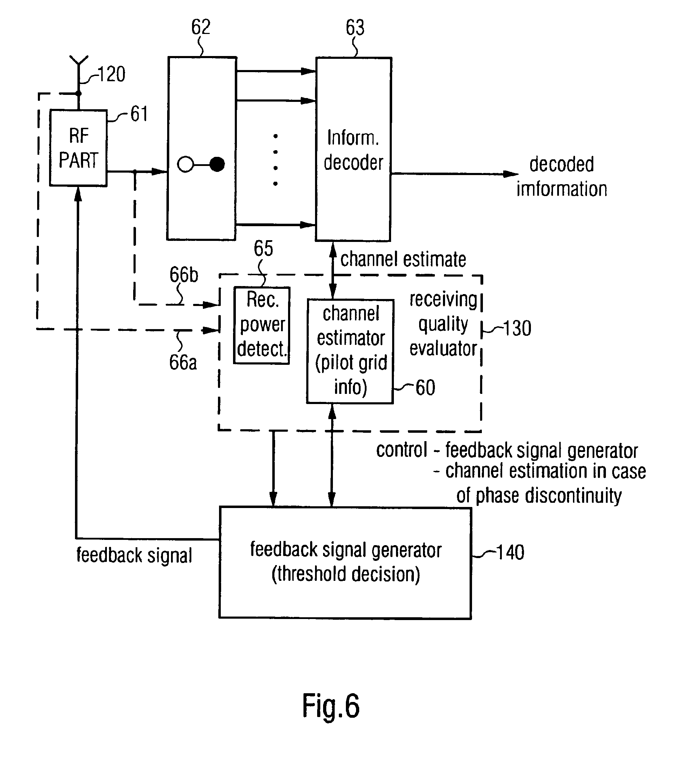

Subsequently, Fig. 6 will be discussed, which illustrates a preferred embodiment of an inventive transmitter/receiver relying on a channel estimator 60. The channel estimator 60 is positioned within a receiving quality evaluator 130. The receiving quality evaluator 130 is part of a transmitter/receiver device 100 of Fig. 1 adapted for a multi-carrier scenario as has been discussed in connection with Fig. 2b. An RF reception part 61 is coupled to receiving antenna 120 and provides a down-mixed multi-carrier spectrum, which is input into an OFDM demodulator 62, which is preferably implemented as a time domain-frequency domain converter preferably implemented as a fast Fourier transform.

The output of the OFDM demodulator is input into an information decoder 63. The information decoder 63 can be implemented as known in the art such as by a demapper and a subsequent information decoder in the form of, for example, a Viterbi decoder or any other decoder relying on channel state information provided by a channel estimator 60. At the output of the information decoder 63, decoded information bits occur.

In the embodiment of Fig. 6, the receiving quality evaluator 130 furthermore includes a receiving power detector 65. The receiving power detector 65 may measure receiving power based on the RF signal as illustrated by input 66a or may measure the receiving power on the basis of the RF part 61 output as illustrated by line 66b.

Furthermore, the feedback signal generator 140 can output the feedback signal into RF part 61 so that the RF part 61 treats the feedback signal so that it can be transmitted via antenna 120 or any other antenna. Alternatively, the feedback signal generator 140 could comprise its own transmitter module for transmitting the feedback signal to the remote transmitter/receiver.

Subsequently, a preferred cooperation between the receiving quality evaluator 130 and the channel estimator will be discussed.

It is preferred that the channel estimator 60 uses a pilot-based channel estimation, which is based on a channel grid as illustrated in Fig. 9 at 90. The filled squares in the illustration in Fig. 9 correspond to pilot tones of the pilot grid. For carriers between the pilot tones, the channel estimator 60 performs a channel interpolation.

This channel interpolation can take place one-dimensional or, preferably, two-dimensional in time and frequency. In accordance with the present invention, the receiving quality evaluator is operative to use the pilot grid information for controlling the feedback signal generator 140 so that a feedback signal can only be generated, when in a chunk or resource block, for which the feedback signal is generated, is a certain number of pilot tones as illustrated in Fig. 9 at 92, in which there are two pilot tones within the chunk. Thus, the channel estimator will be operative to process the phase discontinuity generated by phase flipping. However, the feedback signal generator 140 will also control the channel estimator 60 so that the channel estimator 60 only uses pilot tones within a chunk for interpolating channel information for other sub-carrier values within the chunk. Thus, it is assured that any pilot tones outside of the chunk are not used for interpolating channel subcarrier-values within the chunk. This interpolation using pilot tones outside the chunk is avoided so that the interpolated channel information is not disturbed by the phase discontinuity generated by instantaneous phase flipping in response to the feedback signal generated by the feedback signal generator 140.

A block diagram of such a device is shown in Fig. 9. This block diagram is similar to the block diagram of Fig. 2a, and has elements 23, 21, 22. Additionally, a resource block mapper 90 is provided, which has the functionality to collect those sub-carriers of a single OFDM group of sub-carriers for one time slot so that a single phase control information is sufficient for phase flipping of all the sub-carriers in that group. Naturally, one such group covers only a single column of the resource block (chunk) in the upper portion of Fig. 9. In order to obtain a chunk also having a time dimension, i.e., extending over a certain number of OFDM symbols, the resource block mapper 90 is controlled to make sure that the same phase flipping not only occurs at a single group of sub-carrier or at a single OFDM symbol, but occurs over a plurality of OFDM symbols adjacent in time.

In an alternative embodiment, the feedback signal is not required and the diversity transmitter determines the receiving quality at the remote transmitter by itself without any feedback information. Here, the signal from the remote transmitter/receiver includes a pilot information or a useful information, and the receiver is operative to generate the phase control signal, when the receiving quality is below a threshold. Preferably, the receiver is operative to perform a pilot guided channel estimation or a blind channel estimation of a transmission channel between the remote transmitter/receiver and the transmitter/receiver to obtain a channel estimate, and the receiver is operative to generate a phase control signal, when the channel estimate is below a channel estimate threshold.

Here, the receiver is operative to perform a channel estimation such that a first partial channel estimate for a channel between the first transmit antenna and the remote transmitter/receiver is obtained, and that a second partial channel estimate for a channel between the second transmit antenna and the remote transmitter/receiver is obtained, and the receiver is further operative to use the first and second partial channel estimates for determining, whether a destructive superposition exists at the remote transmitter/receiver, and to generate the phase control signal in case of an existing destructive superposition. Preferably, the phase encoder is operative to change the phase relation such that a destructive superposition at the remote transmitter/receiver is mitigated or changed into a constructive superposition. In a preferred embodiment, the phase encoder is operative to calculate a phase value to be applied to the first or the second transmission signal based on the first or second partial channel estimate. In more advanced but computational intensive embodiments, the phase situation can be controlled such that always a constructive superposition can be obtained which becomes clear from the vector notation in Fig. 3a and particularly in Fig. 4. One can always find a phase value to maximize the length of the resulting channel vector $H_{i,n}$.

Generally, the same embodiments for determining the threshold as discussed in connection with the feedback embodiments can be used for the non-feedback embodiment as well.

This scheme works particularly well, when a time division duplex communication scheme is used, in which the uplink channel and the downlink channel are identical, i.e., have identical frequencies. But even in situations, in which no such TDD scheme is used, this scheme can be useful, when the (downlink) channel from the diversity device to the remote transmitter/receiver is at least similar to the uplink channel from the remote device to the diversity device.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

TERMINOLOGY AND ABBREVIATION

| IFFT | Inverse Fast Fourier Transform |
| CSI | channel state information |
| OFDM | orthogonal frequency division multiplexing |
| Rx | receiver |
| Tx | transmitter |

REFERENCES

[1] S. Kaiser, "Spatial transmit diversity techniques for broadband OFDM systems," in Proceedings IEEE Global Telecommunications Conference (GLOBECOM 2000), San Francisco, USA, pp. 1824-1828, Nov./Dec. 2000.

[2] A. Dammann, S. Kaiser, "Standard conformable antenna diversity techniques for OFDM and its application to the DVB-T system," in Proc. IEEE Global Telecommunications Conference (GLOBECOM 2001), San Antonio, USA, pp. 3100-3105, Nov. 2001.

[3] COST 207,"Digital Land Mobile Radio Communications," Final Report, 1989

**Claims**

1.   Transmitter/receiver (100) for communicating with a remote transmitter/receiver, comprising:

a receiver module (110) for receiving a signal being a superposition of two or more transmit signals sent by two or more transmit antennas (210, 220) positioned at different spatial positions at the remote transmitter/receiver; a receiving quality evaluator (130) for evaluating a receiving quality of the signal; and

a feedback generator (140) for generating a feedback signal for the remote transmitter/receiver, when the receiving quality is below a threshold, the feedback signal being suitable for instructing the remote transmitter/ receiver to change the phase relationship between the transmit signals.

2. Transmitter/receiver in accordance with claim 1, in which a feedback generator (140) includes a transmitter module for transmitting the feedback signal to the remote transmitter/receiver.

3. Transmitter/receiver in accordance with claim 1 or 2, in which the receiving quality evaluator (130) is operative to derive information on a signal-to-noise ratio of the signal, and
wherein the feedback generator is operative to use, as the threshold, a minimum signal-to-noise ratio.

4. Transmitter/receiver in accordance with any one of the preceding claims, in which the receiving quality evaluator (130) is operative to determine information on the reception power of the signal, in which the feedback generator (140) is operative to use, as a threshold, information on a relation between the reception power and the transmit power used for transmitting the transmit signals at the remote transmitter/receiver.

5. Transmitter/receiver in accordance with any one of the preceding claims, in which the receiving quality evaluator (130) includes a channel estimator (60) for estimating information on a transmission channel between the transmitter/ receiver and the remote transmitter/receiver, and
in which the feedback generator (140) is operative to use, as the threshold, a minimum transmission channel coefficient magnitude.

6. Transmitter/receiver of claim 5, in which the feedback generator (140) is operative to use information on the transmit power used for transmitting the two or more transmit signals.

7. Transmitter/receiver in accordance with any one of the preceding claims, in which the feedback generator (140) is operative to generate the feedback signal, when a measured reception power of the signal is smaller than a transmit power for transmitting the first or second transmit signal multiplied by a magnitude of a channel coefficient describing a transmission channel between the transmitter/receiver and the remote transmitter/receiver multiplied by a correction factor,
wherein the correction factor is selected to be a value greater than zero and lower than a coherent superposition of the transmit powers of the transmit antennas.

8. Transmitter/receiver in accordance with any one of the preceding claims, further comprising:

an information decoder (63) for decoding the signal to extract information included in the signal,
wherein the feedback generator (140) is operative to inform the information decoder (63), when the feedback signal is generated.

9. Transmitter/receiver in accordance with any one of the preceding claims,
in which the receiving quality evaluator (130) includes a channel estimator (60) for producing a channel estimate, and which further comprises an information decoder (63) for decoding the signal based on the channel estimate.

10. Transmitter/receiver of claim 9, in which the feedback generator (140) is operative to control the channel estimator (60) to change into a phase flip mode, when the feedback signal is generated.

11. Transmitter/receiver of any one of claims 9 or 10, in which the information decoder (63) is operative to decode pilot information distributed in the signal in accordance with a predetermined pilot grid, and
in which the information decoder (63) is operative to control the feedback generator (140) so that the feedback signal is transmitted only at instances in time or frequency being in a predetermined relation to the pilot grid.

12. Transmitter/receiver of claim 11, in which the channel estimator is operative to interpolate between pilot information on different positions in a predetermined pilot grid to obtain a channel estimate for a position at which no pilot information is available, and
in which the feedback generator (140) is operative to control the channel estimator (60) so that for an interpolation of a channel occurring after generation of the feedback signal, pilot information generated in response to a feedback signal is used by the channel estimator to a higher degree compared to a degree by which the channel estimator is using pilot information generated before the feedback signal was transmitted, or

in which the feedback generator (140) is operative to control the channel estimator (60) so that for an interpolation of a channel occurring after generation of the feedback signal only pilot information generated in response to the feedback signal is used.

13. Transmitter/receiver in accordance with any one of the preceding claims, which is adapted for communicating with the remote transmitter/receiver via a multi-channel modulation scheme having a plurality of sub-channels, and
in which the receiving quality evaluator (130) and the feedback generator (140) are adapted to operate selectively per channel or a group of channels so that the feedback signal includes a phase control information for a single channel or the group of channels.

14. Transmitter/receiver of claim 13, in which a multi-channel modulator implementing the multi-channel modulation scheme is an orthogonal frequency division multiplex modulator,
in which the receiver module (110) includes an orthogonal frequency division multiplex demodulator providing time-sequential groups of OFDM sub-carrier values, and
in which the receiving quality evaluator (130) is operative to evaluate a receiving quality for a chunk of sub-carrier values, the chunk including a plurality of sub-carriers from a plurality of time-sequential groups, and
in which the feedback generator (140) is operative to generate the feedback signal instructing the remote transmitter/ receiver to change the phase relationship for all the sub-carrier values in the chunk in response to a feedback signal relating to all sub-carrier values within the chunk.

15. Transmitter/receiver in accordance with claim 14, in which the receiving quality evaluator (130) or the feedback generator (140) is adapted to operate in chunks having a chunk bandwidth smaller than a channel coherency bandwidth and having a chunk time duration smaller than a channel coherence time.

16. Transmitter/receiver of claim 14 or 15, in which the receiving quality evaluator (130) is operative to average all the channel estimates for sub-carrier values in the chunk or to select a channel estimate for a certain sub-carrier as a representation for the chunk, and
in which the feedback generator (140) is operative to use the average or representation in a threshold comparison.

17. Transmitter/receiver in accordance with any one of the preceding claims, in which the receiving quality evaluator (130) is operative to distinguish between a first sub-channel for a communication between the receiver module (110) and the first transmission antenna (210) and a second sub-channel for a communication between the receiver module (110) and the second transmit antenna (220), and
in which the feedback generator (140) is operative to generate a power control signal suitable for instructing a transmitter to increase a transmit power of the signal transmitted via a better sub-channel among the sub-channels.

18. Transmitter/receiver for communicating with a remote transmitter/receiver, comprising:

   a transmitter module (280) for generating a first transmit signal (290) to be used for being transmitted via a first transmit antenna (210) and for generating a second transmit signal (300) to be used for being transmitted via a second transmit antenna (220);
   a phase encoder (310) coupled to the transmitter module (280) for changing a phase relationship between the first transmit signal (290) and the second transmit signal (300) in response to a phase change control signal (320); and
   a receiver (330) for receiving a signal from the remote transmitter/receiver, the signal comprising pilot information or useful information, and for generating the phase change control signal when a receiving quality of the signal from the remote transmitter/receiver is below a threshold.

19. Transmitter/receiver of claim 18, in which the receiver is operative to receive a feedback signal from the remote transmitter/receiver, the feedback signal instructing the transmitter/receiver to initiate a phase control signal.

20. Transmitter/receiver of claim 18 or 19, in which the feedback signal includes information indicating a single carrier or a group of carriers, and in which the phase encoder is operative to change a phase relationship for the carrier or group of carriers indicated by the feedback signal and to not change the phase relationship for a carrier not indicated by the information.

21. Transmitter/receiver of claim 18, in which the receiver is operative to perform a pilot guided channel estimation or a blind channel estimation of a transmission channel between the remote transmitter/receiver and the transmitter/receiver to obtain a channel estimate, and

in which the receiver is operative to generate a phase control signal, when the channel estimate is below a channel estimate threshold.

22. Transmitter/receiver of claim 21, in which the receiver is operative to perform a channel estimation such that a first partial channel estimate for a channel between the first transmit antenna and the remote transmitter/receiver is obtained, and that a second partial channel estimate for a channel between the second transmit antenna and the remote transmitter/receiver is obtained, and

in which the receiver is further operative to use the first and second partial channel estimates for determining, whether a destructive superposition exists at the remote transmitter/receiver, and to generate the phase control signal in case of an existing destructive superposition.

23. Transmitter/receiver of claim 22, in which the phase encoder is operative to change the phase relation such that a destructive superposition at the remote transmitter/receiver is mitigated or changed into a constructive superposition.

24. Transmitter/receiver of claim 23, in which the phase encoder is operative to calculate a phase value to be applied to the first or the second transmission signal based on the first or second partial channel estimate.

25. Transmitter/receiver of any one of claims 18 to 21, in which a time division duplex communication scheme is used.

26. Transmitter/receiver of any one of claims 18 to 25, in which the transmitter module includes a first transmitter section (24) for generating the first transmit signal and a second transmitter section. (25) for generating the second transmit signal, and

wherein the phase encoder (310) is coupled to selectively control the phase relationship of signals at outputs of the transmitter sections or at inputs into the transmitter sections.

27. Transmitter/receiver in accordance with any one of claims 18 to 26,

in which the transmitter module includes a modulator (21) for modulating an information onto a carrier; and

in which the phase encoder (310) is operative to control the information so that controlled information has a phase different from a phase before controlling.

28. Transmitter/receiver in accordance with any one of claims 18 to 26,

in which the transmitter module (24) includes a base band modulator (21) and a radio frequency modulator, and

in which the phase encoder (310) is operative to change the phase relationship of a value input into or output by the base band modulator.

29. Transmitter/receiver of claim 28, in which the base band modulator is an orthogonal frequency division multiplex modulator (21), and

in which the phase encoder (310) is operative to control a complex amplitude of a sub-carrier amplitude before orthogonal frequency division multiplex modulation using an inverse Fourier transform.

30. Transmitter/receiver in accordance with any one of claims 18 to 29, in which the phase encoder (310) is operative to change the phase by more than 30 degrees and by less than 330 degrees.

31. Transmitter/receiver in accordance with claim 30, in which the phase encoder (310) is operative to change the phase relationship by a value between 90 and 270 degrees.

32. Transmitter/receiver in accordance with any one of claims 18 to 31, in which the receiver module (110) is operative to receive the feedback signal in a channel different from a channel, in which the transmit signals are transmitted.

33. Transmitter/receiver in accordance with any one of claims 18 to 32, further comprising a pilot information inserter for inserting pilot information into the first transmit signal and into the second transmit signal in accordance with a predetermined pilot grid, and

in which the pilot information inserter is operative to change a phase of the pilot information, when the phase change control signal is active for the pilot information.

34. Transmitter/receiver in accordance with any one of claims 18 to 33, in which the phase change control signal is applied to a chunk having a predetermined number of sub-carrier values in a predetermined number of time successive groups of sub-carrier values, and in which the phase encoder (310) is operative to collectively change the phase relationships for all sub-carrier values in the chunk in response to the phase control signal.

35. Transmitter/receiver in accordance with claim 34, further comprising a pilot information inserter for inserting pilot information into the first transmit signal and into the second transmit signal in accordance with a predetermined pilot grid, and
   in which the chunk is selected such that the chunk includes at least one sub-carrier value having pilot information.

36. Transmitter/receiver in accordance with any one of claims 18 to 35,
   in which the receiver is operative to receive a power feedback signal indicating the transmit signal, which is to be transmitted using a different power, and
   in which the transmitter module (280) is operative to change a transmit power for the indicated transmit signal in response to the power feedback signal.

37. Method of communicating between a transmitter/receiver and a remote transmitter/receiver, comprising:

   receiving (110) a signal being a superposition of two or more transmit signals sent by two or more transmit antennas (210, 220) positioned at different spatial positions at the remote transmitter/receiver;
   evaluating (130) a receiving quality of the signal; and
   generating (140) a feedback signal for the remote transmitter/receiver, when the receiving quality is below a threshold, the feedback signal being suitable for instructing the remote transmitter/receiver to change the phase relationship between the transmit signals.

38. Method of communicating between a transmitter/receiver and a remote transmitter/receiver, comprising:

   generating (280) a first transmit signal (290) to be used for being transmitted via a first transmit antenna (210) and for generating a second transmit signal (300) to be used for being transmitted via a second transmit antenna (220), wherein the step of generating is performed such that a phase relationship between the first transmit signal (290) and the second transmit signal (300) is changed (310) in response to a phase change control signal (320); and
   receiving (330) a signal from the remote transmitter/receiver, the signal comprising pilot information or useful information, and generating the phase change control signal when a receiving quality of the signal from the remote transmitter/receiver is below a threshold.

39. Computer program for performing the method in accordance with claim 37 or the method in accordance with claim 38, when the program runs on a computer.

**Patentansprüche**

1. Sender/Empfänger (100) zum Kommunizieren mit einem entfernten Sender/Empfänger, der folgende Merkmale aufweist:

   ein Empfängermodul (110) zum Empfangen eines Signals, das eine Überlagerung zweier oder mehrerer Sendesignale ist, die durch zwei oder mehr Sendeantennen (210, 220) gesendet werden, die an verschiedenen räumlichen Positionen an dem entfernten Sender/Empfänger positioniert sind;
   eine Empfangsqualitätsauswertungseinrichtung (130) zum Auswerten einer Empfangsqualität des Signals; und
   eine Rückmeldungserzeugungseinrichtung (140) zum Erzeugen eines Rückmeldesignals für den entfernten Sender/Empfänger, wenn die Empfangsqualität unterhalb einer Schwelle liegt, wobei das Rückmeldesignal dazu geeignet ist, den entfernten Sender/Empfänger anzuweisen, die Phasenbeziehung zwischen den Sendesignalen zu ändern.

2. Sender/Empfänger gemäß Anspruch 1, bei dem eine Rückmeldungserzeugungseinrichtung (140) ein Sendermodul zum Senden des Rückmeldesignals an den entfernten Sender/Empfänger umfasst.

3. Sender/Empfänger gemäß Anspruch 1 oder 2, bei dem die Empfangsqualitätsauswertungseinrichtung (130) dahin gehend wirksam ist, Informationen über ein Signal/Rausch-Verhältnis des Signals abzuleiten, und
   wobei die Rückmeldungserzeugungseinrichtung dahin gehend wirksam ist, als Schwelle ein minimales Signal/Rausch-Verhältnis zu verwenden.

4. Sender/Empfänger gemäß einem der vorhergehenden Ansprüche, bei dem die Empfangsqualitätsauswertungseinrichtung (130) dahin gehend wirksam ist, Informationen über die Empfangsleistung des Signals zu bestimmen, bei dem die Rückmeldungserzeugungseinrichtung (140) dahin gehend wirksam ist, als Schwelle Informationen über eine Beziehung zwischen der Empfangsleistung und der Sendeleistung, die zum Senden der Sendesignale an dem entfernten Sender/Empfänger verwendet wird, zu verwenden.

5. Sender/Empfänger gemäß einem der vorhergehenden Ansprüche, bei dem die Empfangsqualitätsauswertungseinrichtung (130) eine Kanalschätzeinrichtung (60) zum Schätzen von Informationen über einen Übertragungskanal zwischen dem Sender/Empfänger und dem entfernten Sender/Empfänger umfasst, und
bei dem die Rückmeldungserzeugungseinrichtung (140) dahin gehend wirksam ist, als Schwelle einen minimalen Betrag eines Übertragungskanalkoeffizienten zu verwenden.

6. Sender/Empfänger gemäß Anspruch 5, bei dem die Rückmeldungserzeugungseinrichtung (140) dahin gehend wirksam ist, Informationen über die zum Senden der zwei oder mehr Sendesignale verwendete Sendeleistung zu verwenden.

7. Sender/Empfänger gemäß einem der vorhergehenden Ansprüche, bei dem die Rückmeldungserzeugungseinrichtung (140) dahin gehend wirksam ist, das Rückmeldesignal zu erzeugen, wenn eine gemessene Empfangsleistung des Signals geringer ist als eine Sendeleistung zum Senden des ersten oder zweiten Sendesignals multipliziert mit einem Betrag eines Kanalkoeffizienten, der einen Übertragungskanal zwischen dem Sender/Empfänger und dem entfernten Sender/Empfänger, multipliziert mit einem Korrekturfaktor, beschreibt,
wobei der Korrekturfaktor dahin gehend ausgewählt ist, einen Wert aufzuweisen, der größer ist als null und geringer ist als eine kohärente Überlagerung der Sendeleistungen der Sendeantennen.

8. Sender/Empfänger gemäß einem der vorhergehenden Ansprüche, der ferner folgendes Merkmal aufweist:

    einen Informationsdecodierer (63) zum Decodieren des Signals, um in dem Signal enthaltene Informationen zu extrahieren,
    wobei die Rückmeldungserzeugungseinrichtung (140) dahin gehend wirksam ist, den Informationsdecodierer (63) zu informieren, wenn das Rückmeldesignal erzeugt wird.

9. Sender/Empfänger gemäß einem der vorhergehenden Ansprüche,
bei dem die Empfangsqualitätsauswertungseinrichtung (130) eine Kanalschätzeinrichtung (60) zum Erzeugen einer Kanalschätzung umfasst, und
der ferner einen Informationsdecodierer (63) zum Decodieren des Signals auf der Basis der Kanalschätzung umfasst.

10. Sender/Empfänger gemäß Anspruch 9, bei dem die Rückmeldungserzeugungseinrichtung (140) dahin gehend wirksam ist, die Kanalschätzeinrichtung (60) dahin gehend zu steuern, zu einem Phasenumschaltmodus zu wechseln, wenn das Rückmeldesignal erzeugt wird.

11. Sender/Empfänger gemäß einem der Ansprüche 9 oder 10, bei dem der Informationsdecodierer (63) dahin gehend wirksam ist, Pilotinformationen zu decodieren, die gemäß einem vorbestimmten Pilotgitter in dem Signal verteilt sind, und
bei dem der Informationsdecodierer (63) dahin gehend wirksam ist, die Rückmeldungserzeugungseinrichtung (140) zu steuern, so dass das Rückmeldesignal lediglich zu Zeitpunkten oder mit einer Frequenz übertragen wird, die in einer vorbestimmten Beziehung zu dem Pilotgitter stehen beziehungsweise steht.

12. Sender/Empfänger gemäß Anspruch 11, bei dem die Kanalschätzeinrichtung dahin gehend wirksam ist, zwischen Pilotinformationen über verschiedene Positionen in einem vorbestimmten Pilotgitter zu interpolieren, um eine Kanalschätzung für eine Position zu erhalten, bei der keine Pilotinformationen zur Verfügung stehen, und
bei dem die Rückmeldungserzeugungseinrichtung (140) dahin gehend wirksam ist, die Kanalschätzeinrichtung (60) zu steuern, so dass für eine Interpolation eines Kanals, die nach Erzeugung des Rückmeldesignals auftritt, ansprechend auf ein Rückmeldesignal erzeugte Pilotinformationen seitens der Kanalschätzeinrichtung in einem höheren Maß verwendet werden als ein Maß, in dem die Kanalschätzeinrichtung Pilotinformationen verwendet, die erzeugt wurden, bevor das Rückmeldesignal gesendet wurde, oder
bei dem die Rückmeldungserzeugungseinrichtung (140) dahin gehend wirksam ist, die Kanalschätzeinrichtung (60) zu steuern, so dass für eine Interpolation eines Kanals, die nach Erzeugung des Rückmeldesignals auftritt, lediglich ansprechend auf das Rückmeldesignal erzeugte Pilotinformationen verwendet werden.

13. Sender/Empfänger gemäß einem der vorhergehenden Ansprüche, der zum Kommunizieren mit dem entfernten Sender/Empfänger über ein Mehrkanalmodulationsschema, das eine Mehrzahl von Unterkanälen aufweist, angepasst ist, und
bei dem die Empfangsqualitätsauswertungseinrichtung (130) und die Rückmeldungserzeugungseinrichtung (140) dahin gehend angepasst sind, selektiv pro Kanal oder eine Gruppe von Kanälen zu arbeiten, so dass das Rückmeldesignal Phasensteuerinformationen für einen einzelnen Kanal oder die Gruppe von Kanälen umfasst.

14. Sender/Empfänger gemäß Anspruch 13, bei dem ein Mehrkanalmodulator, der das Mehrkanalmodulationsschema implementiert, ein orthogonaler Frequenzmultiplexmodulator ist,
bei dem das Empfängermodul (110) einen orthogonalen Frequenzmultiplexdemodulator umfasst, der zeitsequentielle Gruppen von OFDM-Unterträgerwerten bereitstellt, und
bei dem die Empfangsqualitätsauswertungseinrichtung (130) dahin gehend wirksam ist, eine Empfangsqualität für einen Block von Unterträgerwerten auszuwerten, wobei der Block eine Mehrzahl von Unterträgern aus einer Mehrzahl von zeitsequentiellen Gruppen umfasst, und
bei dem die Rückmeldungserzeugungseinrichtung (140) dahin gehend wirksam ist, das Rückmeldesignal zu erzeugen, das den entfernten Sender/Empfänger anweist, die Phasenbeziehung für alle Unterträgerwerte in dem Block ansprechend auf ein Rückmeldesignal, das sich auf alle Unterträgerwerte innerhalb des Blocks bezieht, zu ändern.

15. Sender/Empfänger gemäß Anspruch 14, bei dem die Empfangsqualitätsauswertungseinrichtung (130) oder die Rückmeldungserzeugungseinrichtung (140) dahin gehend angepasst ist, in Blöcken zu arbeiten, die eine Blockbandbreite aufweisen, die geringer ist als eine Kanalkohärenzbandbreite, und die eine Blockzeitdauer aufweisen, die geringer ist als eine Kanalkohärenzzeit.

16. Sender/Empfänger gemäß Anspruch 14 oder 15, bei dem die Empfangsqualitätsauswertungseinrichtung (130) dahin gehend wirksam ist, alle Kanalschätzungen für Unterträgerwerte in dem Block zu mitteln oder eine Kanalschätzung für einen bestimmten Unterträger als Darstellung für den Block auszuwählen, und
bei dem die Rückmeldungserzeugungseinrichtung (140) dahin gehend wirksam ist, den Durchschnittswert oder die Darstellung bei einem Blockvergleich zu verwenden.

17. Sender/Empfänger gemäß einem der vorhergehenden Ansprüche, bei dem die Empfangsqualitätsauswertungseinrichtung (130) dahin gehend wirksam ist, zwischen einem ersten Unterkanal für eine Kommunikation zwischen dem Empfängermodul (110) und der ersten Übertragungsantenne (210) und einem zweiten Unterkanal für eine Kommunikation zwischen dem Empfängermodul (110) und der zweiten Sendeantenne (220) zu unterscheiden, und
bei dem die Rückmeldungserzeugungseinrichtung (140) dahin gehend wirksam ist, ein Leistungssteuersignal zu erzeugen, das dazu geeignet ist, einen Sender anzuweisen, eine Sendeleistung des über einen besseren Unterkanal der Unterkanäle gesendeten Signals zu erhöhen.

18. Sender/Empfänger zum Kommunizieren mit einem entfernten Sender/Empfänger, der folgende Merkmale aufweist:

ein Sendermodul (280) zum Erzeugen eines ersten Sendesignals (290), das dafür verwendet werden soll, über eine erste Sendeantenne (210) gesendet zu werden, und zum Erzeugen eines zweiten Sendesignals (300), das dazu verwendet werden soll, über eine zweite Sendeantenne (220) gesendet zu werden;
einen Phasencodierer (310), der mit dem Sendermodul (280) gekoppelt ist, um eine Phasenbeziehung zwischen dem ersten Sendesignal (290) und dem zweiten Sendesignal (300) ansprechend auf ein Phasenänderungssteuersignal (320) zu ändern; und
einen Empfänger (330) zum Empfangen eines Signals von dem entfernten Sender/Empfänger, wobei das Signal Pilotinformationen oder nützliche Informationen umfasst, und zum Empfangen des Phasenänderungssteuersignals, wenn eine Empfangsqualität des Signals von dem entfernten Sender/Empfänger unterhalb einer Schwelle liegt.

19. Sender/Empfänger gemäß Anspruch 18, bei dem der Empfänger dahin gehend wirksam ist, ein Rückmeldesignal von dem entfernten Sender/Empfänger zu empfangen, wobei das Rückmeldesignal den Sender/Empfänger anweist, ein Phasensteuersignal einzuleiten.

20. Sender/Empfänger gemäß Anspruch 18 oder 19, bei dem das Rückmeldesignal Informationen umfasst, die einen einzelnen Träger oder eine Gruppe von Trägern angeben, und bei dem der Phasencodierer dahin gehend wirksam ist, eine Phasenbeziehung für den Träger oder die Gruppe von Trägern, der beziehungsweise die durch das Rückmeldesignal angeben wurde, zu ändern und die Phasenbeziehung für einen Träger, der nicht durch die Informationen angeben wurde, nicht zu ändern.

21. Sender/Empfänger gemäß Anspruch 18, bei dem der Empfänger dahin gehend wirksam ist, eine pilotgeführte Kanalschätzung oder eine blinde Kanalschätzung eines Übertragungskanals zwischen dem entfernten Sender/ Empfänger und dem Sender/Empfänger durchzuführen, um eine Kanalschätzung zu erhalten, und
bei dem der Empfänger dahin gehend wirksam ist, ein Phasensteuersignal zu erzeugen, wenn die Kanalschätzung unterhalb einer Kanalschätzungsschwelle liegt.

22. Sender/Empfänger gemäß Anspruch 21, bei dem der Empfänger dahin gehend wirksam ist, eine Kanalschätzung derart durchzuführen, dass eine erste teilweise Kanalschätzung für einen Kanal zwischen der ersten Sendeantenne und dem entfernten Sender/Empfänger erhalten wird, und dass eine zweite teilweise Kanalschätzung für einen Kanal zwischen der zweiten Sendeantenne und dem entfernten Sender/Empfänger erhalten wird, und
bei dem der Empfänger ferner dahin gehend wirksam ist, die erste und die zweite teilweise Kanalschätzung zum Bestimmen zu verwenden, ob eine destruktive Überlagerung an dem entfernten Sender/Empfänger vorliegt, und im Fall einer existierenden destruktiven Überlagerung das Phasensteuersignal zu erzeugen.

23. Sender/Empfänger gemäß Anspruch 22, bei dem der Phasencodierer dahin gehend wirksam ist, die Phasenbeziehung so zu ändern, dass eine destruktive Überlagerung an dem entfernten Sender/Empfänger zu einer konstruktiven Überlagerung abgemildert oder geändert wird.

24. Sender/Empfänger gemäß Anspruch 23, bei dem der Phasencodierer dahin gehend wirksam ist, einen Phasenwert zu berechnen, der auf das erste oder das zweite Übertragungssignal auf der Basis der ersten oder der zweiten teilweisen Kanalschätzung angewendet werden soll.

25. Sender/Empfänger gemäß einem der Ansprüche 18 bis 21, bei dem ein Zeitduplex-Kommunikationsschema verwendet wird.

26. Sender/Empfänger gemäß einem der Ansprüche 18 bis 25, bei dem das Sendermodul einen ersten Senderabschnitt (24) zum Erzeugen des ersten Sendesignals und einen zweiten Senderabschnitt (25) zum Erzeugen des zweiten Sendesignals umfasst, und
wobei der Phasencodierer (310) dahin gehend gekoppelt ist, die Phasenbeziehung von Signalen an Ausgängen der Senderabschnitte oder an Eingängen in die Senderabschnitte selektiv zu steuern.

27. Sender/Empfänger gemäß einem der Ansprüche 18 bis 26,
bei dem das Sendermodul einen Modulator (21) zum Modulieren von Informationen auf einen Träger umfasst; und
bei dem der Phasencodierer (310) dahin gehend wirksam ist, die Informationen zu steuern, so dass gesteuerte Informationen eine Phase aufweisen, die sich von einer Phase vor dem Steuern unterscheidet.

28. Sender/Empfänger gemäß einem der Ansprüche 18 bis 26,
bei dem das Sendermodul (24) einen Basisbandmodulator (21) und einen Hochfrequenzmodulator umfasst, und
bei dem der Phasencodierer (310) dahin gehend wirksam ist, die Phasenbeziehung eines Wertes, der in den Basisbandmodulator eingegeben oder aus demselben ausgegeben wird, zu ändern.

29. Sender/Empfänger gemäß Anspruch 28, bei dem der Basisbandmodulator ein orthogonaler Frequenzmultiplexmodulator (21) ist, und
bei dem der Phasencodierer (310) dahin gehend wirksam ist, eine komplexe Amplitude einer Unterträgeramplitude vor einer orthogonalen Frequenzmultiplexmodulation unter Verwendung einer inversen FourierTransformation zu steuern.

30. Sender/Empfänger gemäß einem der Ansprüche 18 bis 29, bei dem der Phasencodierer (310) dahin gehend wirksam ist, die Phase um mehr als 30 Grad und um weniger als 330 Grad zu ändern.

31. Sender/Empfänger gemäß Anspruch 30, bei dem der Phasencodierer (310) dahin gehend wirksam ist, die Phasenbeziehung um einen Wert zwischen 90 und 270 Grad zu ändern.

**32.** Sender/Empfänger gemäß einem der Ansprüche 18 bis 31, bei dem das Empfängermodul (110) dahin gehend wirksam ist, das Rückmeldesignal in einem Kanal zu empfangen, der sich von einem Kanal, in dem die Sendesignale gesendet werden, unterscheidet.

**33.** Sender/Empfänger gemäß einem der Ansprüche 18 bis 32, der ferner eine Pilotinformationseinfügungseinrichtung zum Einfügen von Pilotinformationen in das erste Sendesignal und in das zweite Sendesignal gemäß einem vorbestimmten Pilotgitter umfasst, und
bei dem die Pilotinformationseinfügungseinrichtung dahin gehend wirksam ist, eine Phase der Pilotinformationen zu ändern, wenn das Phasenänderungssteuersignal für die Pilotinformationen aktiv ist.

**34.** Sender/Empfänger gemäß einem der Ansprüche 18 bis 33, bei dem das Phasenänderungssteuersignal an einen Block angelegt wird, der eine vorbestimmte Anzahl von Unterträgerwerten in einer vorbestimmten Anzahl von zeitlich aufeinander folgenden Gruppen von Unterträgerwerten aufweist, und
bei dem der Phasencodierer (310) dahin gehend wirksam ist, die Phasenbeziehungen für alle Unterträgerwerte in dem Block ansprechend auf das Phasensteuersignal kollektiv zu ändern.

**35.** Sender/Empfänger gemäß Anspruch 34, der ferner eine Pilotinformationseinfügungseinrichtung zum Einfügen von Pilotinformationen in das erste Sendesignal und in das zweite Sendesignal gemäß einem vorbestimmten Pilotgitter umfasst, und
bei dem der Block so ausgewählt ist, dass der Block zumindest einen Unterträgerwert, der Pilotinformationen aufweist, umfasst.

**36.** Sender/Empfänger gemäß einem der Ansprüche 18 bis 35,
bei dem der Empfänger dahin gehend wirksam ist, ein Leistungsrückmeldesignal zu empfangen, das das Sendesignal angibt, das unter Verwendung einer anderen Leistung gesendet werden soll, und
bei dem das Sendermodul (280) dahin gehend wirksam ist, ansprechend auf das Leistungsrückmeldesignal eine Sendeleistung für das angegebene Sendesignal zu ändern.

**37.** Verfahren zum Kommunizieren zwischen einem Sender/Empfänger und einem entfernten Sender/Empfänger, das folgende Schritte umfasst:

Empfangen (110) eines Signals, das eine Überlagerung zweier oder mehrerer Sendesignale ist, die durch zwei oder mehr Sendeantennen (210, 220) gesendet werden, die an verschiedenen räumlichen Positionen an dem entfernten Sender/Empfänger positioniert sind;
Auswerten (130) einer Empfangsqualität des Signals; und
Erzeugen (140) eines Rückmeldesignals für den entfernten Sender/Empfänger, wenn die Empfangsqualität unterhalb einer Schwelle liegt, wobei das Rückmeldesignal dazu geeignet ist, den entfernten Sender/Empfänger anzuweisen, die Phasenbeziehung zwischen den Sendesignalen zu ändern.

**38.** Verfahren zum Kommunizieren zwischen einem Sender/Empfänger und einem entfernten Sender/Empfänger, das folgende Schritte umfasst:

Erzeugen (280) eines ersten Sendesignals (290), das dafür verwendet werden soll, über eine erste Sendeantenne (210) gesendet zu werden, und Erzeugen eines zweiten Sendesignals (300), das dazu verwendet werden soll, über eine zweite Sendeantenne (220) gesendet zu werden, wobei der Schritt des Erzeugens so durchgeführt wird, dass eine Phasenbeziehung zwischen dem ersten Sendesignal (290) und dem zweiten Sendesignal (300) ansprechend auf ein Phasenänderungssteuersignal (320) geändert wird (310); und
Empfangen (330) eines Signals von dem entfernten Sender/Empfänger, wobei das Signal Pilotinformationen oder nützliche Informationen umfasst, und Empfangen des Phasenänderungssteuersignals, wenn eine Empfangsqualität des Signals von dem entfernten Sender/Empfänger unterhalb einer Schwelle liegt.

**39.** Computerprogramm zum Ausführen des Verfahrens gemäß Anspruch 37 oder des Verfahrens gemäß Anspruch 38, wenn das Programm auf einem Computer läuft.

**Revendications**

**1.** Emetteur/récepteur (100) pour communiquer avec un émetteur/ récepteur distant, comprenant:

un module récepteur (110) destiné à recevoir un signal qui est une superposition de deux ou plusieurs signaux d'émission envoyés à l'émetteur/récepteur distant par deux ou plusieurs antennes d'émission (210, 220) positionnées à différentes positions spatiales;

un évaluateur de qualité de réception (130) destiné à évaluer une qualité de réception du signal; et

un générateur de signal de rétroaction (140) destiné à générer un signal de rétroaction pour l'émetteur/récepteur distant lorsque la qualité de réception est inférieure à un seuil, le signal de rétroaction convenant pour donner instruction à l'émetteur/ récepteur distant de modifier le rapport de phase entre les signaux d'émission.

2. Émetteur/récepteur selon la revendication 1, dans lequel un générateur de signal de rétroaction (140) comporte un module émetteur destiné à émettre le signal de rétroaction vers l'émetteur/récepteur distant.

3. Émetteur/récepteur selon la revendication 1 ou 2, dans lequel l'évaluateur de qualité de réception (130) est opérationnel pour dériver des informations sur un rapport signal-bruit du signal, et dans lequel le générateur de signal de rétroaction est opérationnel pour utiliser, comme seuil, un rapport signal-bruit minimum.

4. Émetteur/récepteur selon l'une quelconque des revendications précédentes, dans lequel l'évaluateur de qualité de réception (130) est opérationnel pour déterminer des informations sur la puissance de réception du signal, dans lequel le générateur de signal de rétroaction (140) est opérationnel pour utiliser, comme seuil, les informations sur un rapport entre la puissance de réception et la puissance d'émission utilisée pour transmettre les signaux d'émission à l'émetteur/récepteur distant.

5. Emetteur/récepteur selon l'une quelconque des revendications précédentes, dans lequel l'évaluateur de qualité de réception (130) comporte un estimateur de canal (60) destiné à estimer les informations sur un canal de transmission entre l'émetteur/récepteur et l'émetteur/ récepteur distant, et

dans lequel le générateur de signal de rétroaction (140) est opérationnel pour utiliser, comme seuil, une amplitude de coefficient de canal de transmission minimale.

6. Émetteur/récepteur selon la revendication 5, dans lequel le générateur de signal de rétroaction (140) est opérationnel pour utiliser les informations sur la puissance d'émission utilisée pour émettre les deux ou plusieurs signaux d'émission.

7. Émetteur/ récepteur selon l'une quelconque des revendications précédentes, dans lequel le générateur de signal de rétroaction (140) est opérationnel pour générer le signal de rétroaction lorsqu'une puissance de réception mesurée du signal est inférieure à une puissance d'émission pour émettre le premier ou le deuxième signal d'émission multiplié par une amplitude de coefficient de canal décrivant un canal de transmission entre l'émetteur/ récepteur et l'émetteur/récepteur distant multiplié par un facteur de correction,

dans lequel le facteur de correction est choisi de manière à être une valeur supérieure à zéro et inférieure à une superposition cohérente des puissances d'émission des antennes d'émission.

8. Émetteur/récepteur selon l'une quelconque des revendications précédentes, comprenant par ailleurs:

un décodeur d'informations (63) destiné à décoder le signal, pour extraire les informations incluses dans le signal, dans lequel le générateur de signal de rétroaction (140) est opérationnel pour informer le décodeur d'informations (63) lorsque le signal de rétroaction est généré.

9. Émetteur/récepteur selon l'une quelconque des revendications précédentes,

dans lequel l'évaluateur de qualité de réception (130) comporte un estimateur de canal (60) destiné à produire une estimation de canal, et

qui comprend par ailleurs un décodeur d'informations (63) destiné à décoder le signal sur base de l'estimation de canal.

10. Émetteur/récepteur selon la revendication 9, dans lequel le générateur de signal de rétroaction (140) est opérationnel pour commander l'estimateur de canal (60) pour passer en mode d'inversion de phase lorsque le signal de rétroaction est généré.

11. Émetteur/ récepteur selon l'une quelconque des revendications 9 ou 10, dans lequel le décodeur d'informations (63) est opérationnel pour décoder les informations pilotes réparties dans le signal selon une grille pilote prédéterminée, et

dans lequel le décodeur d'informations (63) est opérationnel pour commander le générateur de signal de rétroaction (140) de sorte que le signal de rétroaction ne soit transmis qu'à des moments ou selon une fréquence présentant un rapport prédéterminé avec la grille pilote.

**12.** Émetteur/récepteur selon la revendication 11, dans lequel l'estimateur de canal est opérationnel pour interpoler entre les informations pilotes sur différentes positions dans une grille pilote prédéterminée, pour obtenir une estimation de canal pour une position à laquelle aucune information pilote n'est disponible, et

dans lequel le générateur de signal de rétroaction (140) est opérationnel pour commander l'estimateur de canal (60) de sorte que, pour une interpolation d'un canal se produisant après la génération du signal de rétroaction, l'information pilote générée en réponse à un signal de rétroaction soit utilisée par l'estimateur de canal à un degré supérieur, comparé à un degré selon lequel l'estimateur de canal utilise l'information pilote générée avant que le signal de rétroaction n'était transmis, ou

dans lequel le générateur de signal de rétroaction (140) est opérationnel pour commander l'estimateur de canal (60) de sorte que, pour une interpolation d'un canal se produisant après la génération du signal de rétroaction, seule l'information pilote générée en réponse au signal de rétroaction soit utilisée.

**13.** Émetteur/récepteur selon l'une quelconque des revendications précédentes, adapté pour communiquer avec l'émetteur/ récepteur distant via un plan de modulation multicanal ayant une pluralité de sous-canaux, et

dans lequel l'évaluateur de qualité de réception (130) et le générateur de signal de rétroaction (140) sont adaptés pour fonctionner de manière sélective par canal ou un groupe de canaux, de sorte que le signal de rétroaction comporte une information de réglage de phase pour un seul canal ou pour le groupe de canaux.

**14.** Émetteur/récepteur selon la revendication 13, dans lequel un modulateur multicanal mettant en oeuvre le schéma de modulation multicanal est un modulateur multiplexé par division de fréquence orthogonal,

dans lequel le module récepteur (110) comporte un démodulateur multiplexé par division de fréquence orthogonal fournissant des groupes séquentiels dans le temps de valeurs de sous-porteuse OFDM, et

dans lequel l'évaluateur de qualité de réception (130) est opérationnel pour évaluer une qualité de réception pour un paquet de valeurs de sous-porteuse, le paquet comportant une pluralité de sous-porteuses parmi une pluralité de groupes séquentiels dans le temps, et

dans lequel le générateur de signal de rétroaction (140) est opérationnel pour générer le signal de rétroaction donnant instruction à l'émetteur/récepteur distant de changer le rapport de phase pour toutes les valeurs de sous-porteuse dans le paquet en réponse à un signal de rétroaction relatif à toutes les valeurs de sous-porteuse dans le paquet.

**15.** Émetteur/récepteur selon la revendication 14, dans lequel l'évaluateur de qualité de réception (130) ou le générateur de signal de rétroaction (140) est adapté pour fonctionner par paquets ayant une largeur de bande de paquet inférieure à une largeur de bande de cohérence de canal et ayant une durée de paquet inférieure à un temps de cohérence de canal.

**16.** Émetteur/récepteur selon la revendication 14 ou 15, dans lequel l'évaluateur de qualité de réception (130) est opérationnel pour établir la moyenne de toutes les estimations de canal pour les valeurs de sous-porteuse dans le paquet ou pour sélectionner une estimation de canal pour une certaine sous-porteuse comme représentation du paquet, et

dans lequel le générateur de signal de rétroaction (140) est opérationnel pour utiliser la moyenne ou la représentation dans une comparaison avec le seuil.

**17.** Émetteur/récepteur selon l'une quelconque des revendications précédentes, dans lequel l'évaluateur de qualité de réception (130) est opérationnel pour distinguer entre un premier sous-canal pour une communication entre le module récepteur (110) et la première antenne d'émission (210) et un deuxième sous-canal pour une communication entre le module récepteur (110) et la deuxième antenne d'émission (220), et

Dans lequel le générateur de signal de rétroaction (140) est opérationnel pour générer un signal de réglage de puissance convenant pour donner instruction à un émetteur d'augmenter une puissance d'émission du signal émis via un meilleur sous-canal parmi les sous-canaux.

**18.** Émetteur/récepteur pour communiquer avec un émetteur/ récepteur distant, comprenant:

un module émetteur (280) destiné à générer un premier signal d'émission (290) à utiliser pour la transmission via une première antenne d'émission (210) et pour générer un deuxième signal d'émission (300) à utiliser pour la transmission via une deuxième antenne d'émission (220);

un codeur de phase (310) couplé au module émetteur (280) pour changer un rapport de phase entre le premier signal d'émission (290) et le deuxième signal d'émission (300) en réponse à un signal de commande de changement de phase (320); et

un récepteur (330) destiné à recevoir un signal de l'émetteur/ récepteur distant, le signal comprenant des informations pilotes ou des informations utiles, et à générer le signal de commande de changement de phase lorsqu'une qualité de réception du signal de l'émetteur/récepteur distant est inférieure à un seuil.

19. Émetteur/récepteur selon la revendication 18, dans lequel le récepteur est opérationnel pour recevoir un signal de rétroaction de l'émetteur/récepteur distant, le signal de rétroaction donnant instruction à l'émetteur/ récepteur d'initier un signal de réglage de phase.

20. Émetteur/récepteur selon la revendication 18 ou 19, dans lequel le signal de rétroaction comporte des informations indiquant une seule porteuse ou un groupe de porteuses, et dans lequel le codeur de phase est opérationnel pour changer un rapport de phase pour la porteuse ou le groupe de porteuses indiqué par le signal de rétroaction et pour ne pas changer le rapport de phase pour une porteuse non indiquée par les informations.

21. Émetteur/récepteur selon la revendication 18, dans lequel le récepteur est opérationnel pour effectuer une estimation de canal guidée par un signal pilote ou une estimation de canal aveugle d'un canal de transmission entre l'émetteur/récepteur distant et l'émetteur/récepteur, pour obtenir une estimation de canal, et

dans lequel le récepteur est opérationnel pour générer un signal de réglage de phase lorsque l'estimation de canal est inférieure à un seuil d'estimation de canal.

22. Émetteur/récepteur selon la revendication 21, dans lequel le récepteur est opérationnel pour effectuer une estimation de canal de sorte que soit obtenue une première estimation de canal partielle pour un canal entre la première antenne d'émission et l'émetteur/récepteur distant, et que soit obtenue une deuxième estimation de canal partielle pour un canal entre la deuxième antenne d'émission et l'émetteur/récepteur distant, et

dans lequel le récepteur est par ailleurs opérationnel pour utiliser les première et deuxième estimations de canal partielles pour déterminer s'il existe une superposition destructive à l'émetteur/ récepteur distant, et pour générer le signal de réglage de phase au cas où il existe une superposition destructive.

23. Émetteur/récepteur selon la revendication 22, dans lequel le codeur de phase est opérationnel pour changer le rapport de phase de sorte qu'une superposition destructive à l'émetteur/ récepteur distant soit atténuée ou changée en une superposition constructive.

24. Émetteur/récepteur selon la revendication 23, dans lequel le codeur de phase est opérationnel pour calculer une valeur de phase à appliquer au premier ou au deuxième signal de transmission sur base de la première ou de la deuxième estimation de canal partielle.

25. Émetteur/récepteur selon l'une quelconque des revendications 18 à 21, dans lequel est utilisé un schéma de communication duplexé par division de temps.

26. Émetteur/récepteur selon l'une quelconque des revendications 18 à 25, dans lequel le module émetteur comporte un premier segment d'émetteur (24) destiné à générer le premier signal d'émission et un deuxième segment d'émetteur (25) destiné à générer le deuxième signal d'émission, et

dans lequel le codeur de phase (310) est couplé pour commander de manière sélective le rapport de phase des signaux aux sorties des segments d'émetteur ou aux entrées dans les segments d'émetteur.

27. Émetteur/récepteur selon l'une quelconque des revendications 18 à 26,

dans lequel le module émetteur comporte un modulateur (21) destiné à moduler une information sur une porteuse; et

dans lequel le codeur de phase (310) est opérationnel pour régler l'information de sorte que l'information réglée ait une phase différente d'une phase avant le réglage.

28. Émetteur/récepteur selon l'une quelconque des revendications 18 à 26,

dans lequel le module émetteur (24) comporte un modulateur de bande de base (21) et un modulateur de radiofréquence, et

dans lequel le codeur de phase (310) est opérationnel pour changer le rapport de phase d'une valeur entrée dans ou sortie par le modulateur de bande de base.

29. Émetteur/récepteur selon la revendication 28, dans lequel le modulateur de bande de base est un modulateur multiplexé par division de fréquence orthogonal (21), et

dans lequel le codeur de phase (310) est opérationnel pour régler une amplitude complexe d'une amplitude de sous-porteuse avant la modulation multiplexée par division de fréquence orthogonale à l'aide d'une transformée de Fourier inverse.

30. Émetteur/récepteur selon l'une quelconque des revendications 18 à 29, dans lequel le codeur de phase (310) est opérationnel pour changer la phase de plus de 30 degrés et de moins de 330 degrés.

31. Émetteur/récepteur selon la revendication 30, dans lequel le codeur de phase (310) est opérationnel pour changer le rapport de phase d'une valeur comprise entre 90 et 270 degrés.

32. Émetteur/récepteur selon l'une quelconque des revendications 18 à 31, dans lequel le module récepteur (110) est opérationnel pour recevoir le signal de rétroaction dans un canal différent d'un canal dans lequel sont transmis les signaux d'émission.

33. Émetteur/récepteur selon l'une quelconque des revendications 18 à 32, comprenant par ailleurs un moyen d'insertion d'informations pilotes destiné à insérer des informations pilotes dans le premier signal d'émission et dans le deuxième signal d'émission selon une grille pilote prédéterminée, et

dans lequel le moyen d'insertion d'informations pilotes est opérationnel pour changer une phase des informations pilotes lorsque le signal de commande de changement de phase est actif pour les informations pilotes.

34. Émetteur/récepteur selon l'une quelconque des revendications 18 à 33, dans lequel le signal de commande de changement de phase est appliqué à un paquet ayant un nombre prédéterminé de valeurs de sous-porteuse dans un nombre prédéterminé de groupes de valeurs de sous-porteuse successifs dans le temps, et

dans lequel le codeur de phase (310) est opérationnel pour changer collectivement les rapports de phase pour toutes les valeurs de sous-porteuse dans le paquet en réponse au signal de réglage de phase.

35. Émetteur/récepteur selon la revendication 34, comprenant par ailleurs un moyen d'insertion d'informations pilotes destiné à insérer des informations pilotes dans le premier signal d'émission et dans le deuxième signal d'émission selon une grille pilote prédéterminée, et

dans lequel le paquet est choisi de sorte que le paquet comporte au moins une valeur de sous-porteuse ayant des informations pilotes.

36. Émetteur/récepteur selon l'une quelconque des revendications 18 à 35,

dans lequel le récepteur est opérationnel pour recevoir un signal de rétroaction de puissance indiquant le signal d'émission qui doit être transmis à l'aide d'une puissance différente, et

dans lequel le module émetteur (280) est opérationnel pour changer une puissance d'émission pour le signal d'émission indiqué en réponse au signal de rétroaction de puissance.

37. Procédé pour communiquer entre un émetteur/récepteur et un émetteur/récepteur distant, comprenant:

recevoir (110) un signal qui est une superposition de deux ou plusieurs signaux d'émission envoyés à l'émetteur/récepteur distant par deux ou plusieurs antennes d'émission (210, 220) positionnées à des positions spatiales différentes;

évaluer (130) une qualité de réception du signal; et

générer (140) un signal de rétroaction pour l'émetteur/récepteur distant lorsque la qualité de réception est inférieure à un seuil, le signal de rétroaction convenant pour donner instruction à l'émetteur/ récepteur distant de changer le rapport de phase entre les signaux d'émission.

38. Procédé pour communiquer entre un émetteur/récepteur et un émetteur/ récepteur distant, comprenant:

générer (280) un premier signal d'émission (290) à utiliser pour transmission via une première antenne d'émission (210) et générer un deuxième signal d'émission (300) à utiliser pour transmission via une deuxième antenne d'émission (220), où l'étape de génération est réalisée de sorte qu'un rapport de phase entre le premier signal d'émission (290) et le deuxième signal d'émission (300) soit changé (310) en réponse à un signal de commande de changement de phase (320); et

recevoir (330) un signal de l'émetteur/récepteur distant, le signal comprenant des informations pilotes ou des informations utiles, et générer le signal de commande de changement de phase lorsqu'une qualité de réception du signal de l'émetteur/récepteur distant est inférieure à un seuil.

**39.** Programme d'ordinateur pour réaliser le procédé selon la revendication 37 ou le procédé selon la revendication 38 lorsque le programme est exécuté sur un ordinateur.

200     310     320     330

2$^{nd}$ transmitting
antenna

| Phase
encoder | | Receiver for
feedback |

1$^{st}$ transmitting
antenna

300

220

280

Phase
flip C

| Transmitter
module |

210

290

H$^{(2)}$

Information signal

240

Information signal

H$^{(1)}$

230

Feedback
signal

120

150

110

| Receiving
module | | Feedback
generator |

140

100

| Receiving quality
evaluator |

130

Fig.1

Arbitrary number of Tx antennas

$S_{i,n}$

$S_{i,n}^{(m)} = C_{i,n}^{(m)} S_{i,n}$

to antenna #1

to antenna #M

Fig.2a

Fig.2b

- OFDM scheme with 2 transmit antennas and 1 receive antenna.

- Transmitter with phase coding:

$S_{i,n}$ → OFDM → to antenna #1

$S_{i,n}$ → Phase Encoder → OFDM → to antenna #2

- Signal on antenna 1:   $S_{i,n}^{(1)} = S_{i,n}$

- Signal on antenna 2:   $S_{i,n}^{(2)} = C_{i,n} S_{i,n}$

- Phase coding states and coefficients:

| State | A | B |
|---|---|---|
| Coefficient $C_{i,n}$ | 1 | $e^{-j\pi}$ |

- Criterion for state change:   $\text{if } \begin{cases} |H_{i,n}| \geq V & \Rightarrow \text{no state change} \\ |H_{i,n}| < V & \Rightarrow \text{state change} \end{cases}$

- V is the dicision threshold.

# Fig.2c

| Signals from 2 Tx antennas | Superposition at Rx antenna | | Vektor notation |
|---|---|---|---|
| #1, #2 | | constructive superposition | $P_{rec} \sim 4P_{tr}$ |
| #1, #2 | | destructive superposition | $P_{rec} \sim 0$ |
| #1, #2 | | power neutral superposition | $P_{rec} \sim 2P_{tr}$ |

Fig.3a

Fig.3b

Fig.3c

$H_{i,n}^{(2)}$    channel coefficient of channel from 1st Tx antenna

$H_{i,n}^{(1)}$    channel coefficient of channel from 2st Tx antenna

$H_{i,n}$    resulting channel coefficient at Rx antenna

no state change          state change

# Fig.4

Channel fading with and without phase coding

Fig.5

Fig.6

Fig.7

Simulation parameters:

- Convolutional code R=1/2
- QPSK symbol mapping
- 512 subcarriers
- COST 207, Typical Urban channel model
- Max. Doppler frequency: 55.56 Hz

BER: Bit error rate

SNR: Signal-to-noise ratio, here $E_t/N_o$

$E_t$: transmitted energy per bit

$N_0$: noise spectral density

Simulation parameters:

- Convolutional code R=1/2
- QPSK symbol mapping
- 512 subcarriers
- JTC Indoor Commercial B channel model
- Max. Doppler frequency: 5.56 Hz

BER: Bit error rate

SNR: Signal-to-noise ratio, here $E_t/N_o$

$E_t$: transmitted energy per bit

$N_0$: noise spectral density

Fig.8

Pilot tone
of pilot grid    OFDM    "group of subcarriers"

92 Pilot tone in chunk

90

$N_F$ subcarriers

OFDM frame including
time-sucessive groups
of subcarriervalues

$N_T$ OFDM symbols

1 resource block within
an OFDM frame (chunk)

$S_{i,n}$ → Resource Block Mapper (90) → Phase encoder (23) → OFDM (21) → to antenna #1

OFDM (22) → to antenna #M

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1681784 A2
- EP 1156596 A1
- US 20050048933 A1

**Non-patent literature cited in the description**

- **S. KAISER.** Spatial transmit diversity techniques for broadband OFDM systems. *Proceedings IEEE Global Telecommunications Conference (GLOBECOM 2000,* November 2000, 1824-1828
- **A. DAMMANN ; S. KAISER.** Standard conformable antenna diversity techniques for OFDM and its application to the DVB-T system. *Proc. IEEE Global Telecommunications Conference (GLOBECOM 2001,* November 2001, 3100-3105
- Digital Land Mobile Radio Communications. *COST 207,* 1989